(19) **Europäisches Patentamt / European Patent Office / Office européen des brevets**

(11) **EP 1 763 148 B1**

(12) **EUROPEAN PATENT SPECIFICATION**

(45) Date of publication and mention of the grant of the patent:
**23.12.2015 Bulletin 2015/52**

(51) Int Cl.:
***H04L 27/00*** *(2006.01)*   ***H04B 17/00*** *(2015.01)*
***H04B 1/715*** *(2011.01)*

(21) Application number: **06731303.1**

(22) Date of filing: **06.04.2006**

(86) International application number:
**PCT/JP2006/307355**

(87) International publication number:
**WO 2006/134713 (21.12.2006 Gazette 2006/51)**

(54) **COMMUNICATION DEVICE TEST SIGNAL GENERATING APPARATUS AND COMMUNICATION DEVICE TEST SIGNAL GENERATING METHOD**

VORRICHTUNG ZUM ERZEUGEN EINES TESTSIGNALS FÜR EIN KOMMUNIKATIONSGERÄT UND VERFAHREN ZUM ERZEUGEN EINES SIGNALS FÜR EIN KOMMUNIKATIONSGERÄT

APPAREIL ET PROCÉDÉ DE GÉNÉRATION DE SIGNAL D ESSAI DE DISPOSITIF DE COMMUNICATION

(84) Designated Contracting States:
**DE FR GB**

(30) Priority: **14.06.2005 JP 2005173877**

(43) Date of publication of application:
**14.03.2007 Bulletin 2007/11**

(73) Proprietor: **Anritsu Corporation
Atsugi-shi
Kanagawa 243-8555 (JP)**

(72) Inventors:
• **KUMAKI, Akihisa
  Atsugi-shi, Kanagawa, 243-8555 (JP)**
• **OTANI, Ikuya
  Atsugi-shi, Kanagawa, 243-8555 (JP)**
• **AKIYAMA, Norihiro
  Atsugi-shi, Kanagawa, 243-8555 (JP)**

(74) Representative: **Balsters, Robert et al
Novagraaf International S.A.
Chemin de l'Echo 3
1213 Onex (CH)**

(56) References cited:
JP-A- 07 273 555   JP-A- 08 510 627
JP-A- 11 186 941   JP-A- 2002 246 992
JP-A- 2005 012 274   JP-A- 2005 294 984

EP 1 763 148 B1

**Description**

Technical field

The present invention relates to a test signal generating apparatus for communications equipment and a test signal generating method for communications equipment, and in particular, to a test signal generating apparatus for communications equipment and a test signal generating method for communications equipment by which a modulating signal including at least one or more types of unit data is generated as a test signal for communications equipment.

Background Art

When communications equipment such as a mobile communication terminal, for example, a mobile telephone is newly developed, some sort of malfunction may be brought about in a mobile telephone in operation, or a mobile telephone in operation has expired a predetermined duration of service in some instances. In such a case, a communication test is required for confirming that various functions of these mobile telephones function normally.

Specifically, there is required a communication test for confirming that it is possible for a mobile telephone serving as a test object for such a communication test to normally execute transmission and reception of various signals to and from a base station.

In this case, in reality, it is impossible to execute a communication test by using a base station in operation. For this reason, the test is performed by using a pseudo-base station device (mobile network simulator device) having the functions of the base station (refer to the following Patent Document 1).

Pat. Document 1: Jpn. Pat. Appln. KOKAI Publication No. 2004-330594

In this communication test using a mobile network simulator device, various signals (modulating signals) are transmitted from a test signal generating apparatus incorporated in the mobile network simulator device to a mobile telephone serving as a test object, in place of a base station. In addition, a reply signal from the mobile telephone is received by a receiver separately provided in the mobile network simulator device. Consequently, a signal level of the reply signal, a content of the reply signal, and the like are checked on, and it is verified whether or not the mobile telephone serving as a test object functions normally.

For example, in order to test a power control function of reply signals of a mobile telephone serving as a test object to a base station, a communication test is performed. The communication test is to confirm that, by sequentially lowering signal levels of test signals to be transmitted to the mobile telephone serving as a test object from the test signal generating apparatus incorporated in a mobile network simulator device, signal levels of reply signals from the mobile telephone serving as a test object sequentially rise.

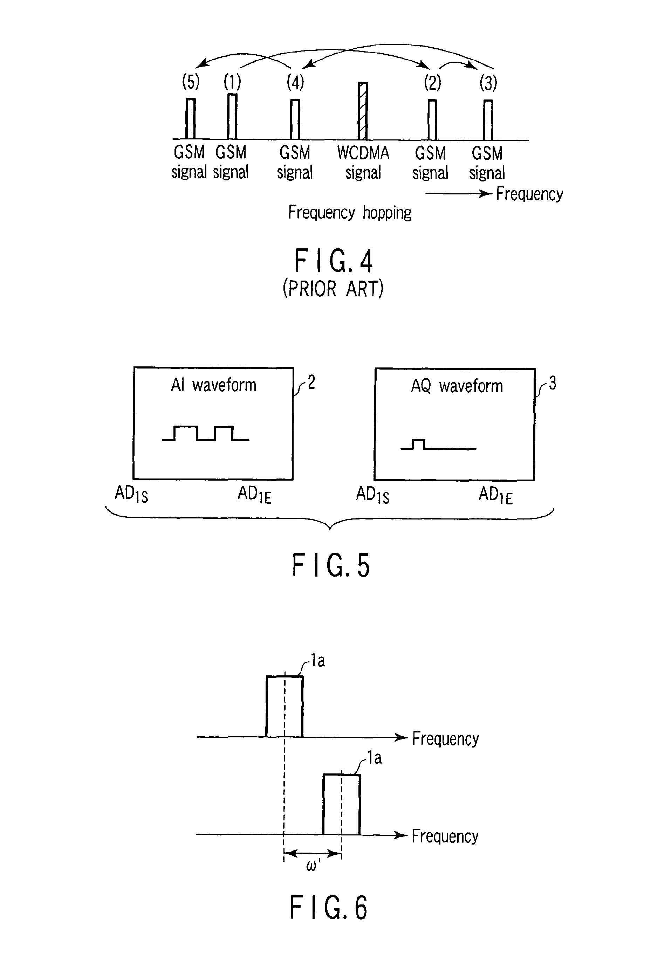

Further, as shown in FIG. 4, assume a case in which there is a Global System for Mobile Communication (GSM) digital mobile telephone system mode signal within a range (cell) of receiving a Wideband Code Division Multiple Access (WCDMA) signal. In this case, a phenomenon is brought about in which a frequency of the GSM signal discretely moves about a frequency of the WCDMA signal, which results in an interfering wave with mobile telephones in a WCDMA system.

Therefore, frequency hopping is achieved in which a frequency (carrier frequency) of a test signal imitating the GSM signal as described above is changed by a test signal generating apparatus incorporated in a mobile network simulator device, so that a communication test for grasping resistance of a mobile telephone in a WCDMA system serving as a test object with respect to an interfering wave by a GSM signal is executed.

In addition to several communication tests as described above, various communication tests are executed for grasping characteristics of various functions of a mobile telephone based on reply signals of the mobile telephone serving as a test object are executed in such a manner that various test signals are transmitted from the test signal generating apparatus to the mobile telephone serving as a test object.

Accordingly, in a communication test using a mobile network simulator device in this way, a test signal generating apparatus incorporated in the mobile network simulator device is required to prepare test signals having different data, different signal levels, and different frequencies for each of various communication tests.

In the following Patent Document 2, as one of techniques of preparing highly accurate test signals in large quantity and for a short time, there is disclosed some of a technology in which signal waveforms of respective test signals are stored in advance in a memory unit, and the stored signal waveforms are read out to be output as test signals.

Pat. Document 2: Jpn. Pat. Appln. KOKAI Publication No. 7-273555

However, as in the Patent Document 2 described above, there are still the following problems to be solved even in the technology in which signal waveforms stored in advance in a memory unit are read out to be output as test signals.

First, when a frequency hopping signal is generated by using a sequence function of a test signal generator with a wideband width baseband, frequency offset is applied. However, there is a problem that waveform data whose frequency characteristics have been corrected in accordance with the frequency offset must be prepared every frequency offset after high-level accuracy in each hopping frequency is insured.

In this case, frequency characteristics differ each of the respective frequency offsets serving as test objects. For this reason, types of test signals including waveform data whose frequency characteristics have been corrected in accordance with each frequency offset are made to be in vast numbers. Accordingly, there is a problem that a memory capacity required for a memory device such as a hard disk drive which stores respective signal waveforms of those test signals is greatly increased.

Further, in this case, level correction values for correcting frequency characteristics in accordance with each of the respective frequency offsets are stored in advance in a waveform memory, and a frequency characteristic corresponding to each frequency offset is corrected. Consequently, there is a problem that a memory capacity of the waveform memory is greatly increased.

Further, there is a problem that a large amount of labor is required for an operation of generating signal waveforms of test signals having different waveform data, different signal levels, and different frequencies for each of various communication tests for a mobile telephone serving as a test object.

Furthermore, because frequency characteristics differ every mobile telephone serving as a test object, there is a problem that a large amount of labor and time-consuming are required for generating signal waveforms of test signals having frequency characteristics which differ every mobile telephone serving as a test object.

Moreover, in various communication tests for communications equipment such as mobile communication terminals, continuity of frames in a test signal is required. As a consequence, continuity of waveform data at the time of switching the waveforms of the test signal is required, and in many cases, same data is repeatedly used several times depending on a test signal. Therefore, there is a problem that a function of repeatedly outputting same data several times is required in order to insure continuity of waveform data at the time of switching.

Disclosure of Invention

In order to solve the problems in a prior art as described above, an object of the present invention is to provide a test signal generating apparatus for communications equipment and a test signal generating method for communications equipment which can keep a required memory capacity of a memory device to a minimum, and can greatly reduce an operation of generating signal waveforms of a test signal, and which can handle even when identical data is repeatedly used several times while insuring high-level accuracy in each hopping frequency.

In order to achieve the above object, according to a first aspect of the present invention, there is provided a test signal generating apparatus for communications equipment, comprising:

a pair of waveform memories (2, 3) in which I component waveform digital data (hereinafter, referred to as I waveform data) and Q component waveform digital data (hereinafter, referred to as Q waveform data) which configure a set of digital baseband quadrature signals I and Q in at least one or more types of unit data serving as sources of a test signal to be finally output, are respectively stored in advance at predetermined addresses;
a read control unit (7) to sequentially output the I waveform data and the Q waveform data from the pair of waveform memories;
a pair of multipliers (9, 10) to set signal levels of the I waveform data and the Q waveform data which are sequentially output from the pair of waveform memories to desired signal levels by the read control unit, respectively;
a pair of digital-to-analog converters (19, 20) which convert the I waveform data and the Q waveform data which are sequentially output from the pair of multipliers into an I waveform analog signal and a Q waveform analog signal, respectively;
a frequency offset unit (34) which sets offset frequencies for providing frequency offsets at a plurality of steps every predetermined intervals by using a predetermined carrier frequency provided to the test signal as a reference, with respect to the I waveform data and the Q waveform data between the pair of waveform memories and the pair of digital-to-analog converters;
a sequence memory (4a) which stores in advance: first sequence information including a reading order and read addresses of the unit data including the I waveform data and the Q waveform data stored in the pair of waveform memories, and the desired signal levels to be set in the unit data including the I waveform data and the Q waveform data read from the pair of waveform memories; and second sequence information including the offset frequencies set for providing frequency offsets at a plurality of steps every predetermined intervals by using the predetermined carrier frequency provided to the test signal as a reference, with respect to the unit data including the I waveform data and the Q waveform data read from the pair of waveform memories;
a sequence control unit (6a) which reads the first sequence information from the sequence memory, instructs the read control unit about the reading order and the read addresses included in the first sequence information thereby causing to sequentially output the I waveform data and the Q waveform data from the pair of waveform memories, and instructs the pair of multipliers about the desired signal levels included in the first sequence information in response to a timing at which the I waveform data and the Q waveform data are output from the pair of waveform memories thereby causing to set signal levels of the I waveform data and the Q waveform data which are sequentially output from the pair of waveform memories respectively to the desired signal levels, and further reads the second sequence information from the sequence memory, and instructs the frequency offset unit about the offset frequencies included in the second sequence information thereby causing to set the offset frequencies for providing frequency offsets at a plurality of steps every predetermined intervals by using the predetermined carrier frequency provided to the test signal as a reference, with respect to the unit data including the I waveform data and the Q waveform data; and

a test signal output unit (100) which converts the I waveform analog signal and the Q waveform data signal which are sequentially output from the pair of digital-to-analog converters into a high-frequency signal by using a carrier frequency signal after carrying out quadrature modulation to the signals, thereby causing to output the high-frequency signal finally in form of the modulating signal and as a test signal along with frequency offsets at a plurality of steps every predetermined intervals by using the predetermined frequency as a reference.

In order to achieve the above object, according to a second aspect of the present invention, there is provided the test signal generating apparatus for communications equipment according to the first aspect, wherein the frequency offset unit is provided between the pair of waveform memories and the pair of multipliers.

In order to achieve the above object, according to a second aspect of the present invention, there is provided the test signal generating apparatus for communications equipment according to the first aspect, wherein the frequency offset unit is provided between the pair of multipliers and the pair of digital-to-analog converters.

In order to achieve the above object, according to a fourth aspect of the present invention, there is provided the test signal generating apparatus for communications equipment according to the first aspect, wherein the test signal output unit comprises:

a quadrature modulator (21) which quadrature-modulates the I waveform analog signal and the Q waveform analog signal which are sequentially output from the pair of digital-to-analog converters by using a local oscillation signal from a local oscillator (21a), to be output as a modulating signal;

a frequency converter (22) which converts the modulating signal output from the quadrature modulator into a high-frequency signal by using a carrier frequency signal from an oscillator (23), to be output in form of the modulating signal and as a test signal along with a predetermined carrier frequency; and

a band-pass filter (24) which eliminates unnecessary frequency components included in the test signal output from the frequency converter, thereby causing to output the test signal finally in form of the modulating signal and as a test signal along with offset frequencies at a plurality of steps every predetermined intervals by using the predetermined carrier frequency as a reference.

In order to achieve the above object, according to a fifth aspect of the present invention, there is provided the test signal generating apparatus for communications equipment according to the fourth aspect, wherein when at least the band-pass filter is provided as a component having an uneven frequency characteristic to the test signal output unit,

the sequence memory stores in advance third sequence information including level offset values for setting level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequencies included in the second sequence information, and

the sequence control unit reads the third sequence information from the sequence memory, and instructs the pair of multipliers about the level offset values included in the third sequence information in response to a timing at which the I waveform data and the Q waveform data are output from the pair of waveform memories, thereby causing to set level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequency information included in the second sequence information.

In order to achieve the above object, according to a sixth aspect of the present invention, there is provided the test signal generating apparatus for communications equipment according to the first aspect, wherein the sequence memory stores in advance fourth sequence information including the number of repetitions of reading I waveform data and Q waveform data for each of the unit data from the pair of waveform memories in order to set the number of repetitions for each of the unit data included in the test signal to be finally output, and

the sequence control unit reads the fourth sequence information from the sequence memory, and instructs the read control unit about the number of repetitions of reading I waveform data and Q waveform data for each of the unit data included in the fourth sequence information from the pair of waveform memories in response to a timing at which the I waveform data and the Q waveform data are output from the pair of waveform memories, thereby causing to sequentially output from the pair of waveform memories the unit data continuously the number of times corresponding to the number of repetitions of reading I waveform data and Q waveform data for each of the unit data from the pair of waveform memories.

In order to achieve the above object, according to a seventh aspect of the present invention, there is provided the test signal generating apparatus for communications equipment according to the first aspect, wherein the second sequence information including offset frequencies to be stored in the sequence memory is set as offset frequencies which enable to achieve frequency hopping which enables achieving a carrier frequency f of a test signal imitating a Global System for Mobile Communication (GSM) signal as the test signal is made to vary with time, whereby it is possible to achieve an interfering wave resistance test for a device to be tested in a Wideband Code Division Multiple Access (WCDMA) system by means of the GSM signal in such a manner that the GSM signal discretely moves within a range of received frequencies of the device to be tested in the WCDMA system.

In order to achieve the above object, according to an eighth aspect of the present invention, there is provided the test signal generating apparatus for communications equipment according to the first aspect, wherein

the pair of multipliers multiply the I waveform data and the Q waveform data output from the pair of waveform memories by a gain multiplication value determined based on the signal levels instructed by the sequence control unit, thereby causing to set signal levels of the I waveform data and the Q waveform data output from the pair of waveform memories to the signal levels included in the first sequence information which is stored in the sequence memory.

In order to achieve the above object, according to a ninth aspect of the present invention, there is provided the test signal generating apparatus for communications equipment according to the fifth aspect, wherein

the pair of multipliers multiply the I waveform data and the Q waveform data output from the pair of waveform memories by a gain multiplication value determined based on the level offset values included in the third sequence information, the level offset values being instructed by the sequence control unit, thereby causing to set signal levels of the I waveform data and the Q waveform data read from the pair of waveform memories to the level offset values included in the third sequence information which is stored in the sequence memory.

In order to achieve the above object, according to a tenth aspect of the present invention, there is provided the test signal generating apparatus for communications equipment according to the first aspect, further comprising:

a test database (27) formed in a hard disk drive having provided therein a waveform database (28) which stores I waveform data and Q waveform data of the unit data included in the test signal and a sequence database (27) which stores various sequence information; and
a data writing unit (32) connected to the test database, wherein
the I waveform digital data and the Q waveform digital data stored in the waveform database, and the various sequence information stored in the sequence database are prepared outside, and downloaded into the test database, and
when I waveform digital data and Q waveform digital data corresponding to a test signal to be newly output are read from the waveform database via the data writing unit and written into the pair of waveform memories, and at the same time, sequence information corresponding to the test signal to be newly output is read from the sequence database and written into the sequence memory.

In order to achieve the above object, according to an eleventh aspect of the present invention, there is provided the test signal generating apparatus for communications equipment according to the first aspect, further comprising:

a numerical control oscillator (33) which causes the sequence control unit to specify, as the offset frequencies included in the second sequence information read from the sequence memory, offset frequencies ($\omega$') for providing frequency offsets at a plurality of steps every predetermined intervals by using the predetermined carrier frequency provided to the test signal as a reference, wherein
the numerical control oscillator generates a sine wave $\sin\omega$'(t) and a cosine wave $\cos\omega$'(t) which correspond to the offset frequencies ($\omega$') specified by the sequence control unit, and transmits those to the frequency offset unit, and
when frequencies $\omega$ (= $2\pi f$) of the I waveform data and the Q waveform data are offset by offset frequencies $\omega$' (= $2\pi f$') stored in the sequence memory, the frequency offset unit carries out frequency offset processing in such a manner that, when the I waveform data and the Q waveform data are respectively denoted by:

$$\cos\omega(t), \quad \sin\omega(t) \qquad \qquad ...(1),$$

the sine wave and cosine wave are converted respectively into:

$$\cos\{\omega(t) + \omega'(t)\}, \sin\{\omega(t) + \omega'(t)\} \qquad ...(2).$$

In order to achieve the above object, according to a twelfth aspect of the present invention, there is provided the test signal generating apparatus for communications equipment according to the eleventh aspect, wherein when the formula (2) is expressed by using the formula (1) and the offset frequencies ($\omega'$) to be:

$$\cos\{\omega(t) + \omega'(t)\}$$

$$= -\sin\omega(t)\cdot\sin\omega'(t) + \cos\omega(t)\cdot\cos\omega'(t),$$

$$\sin\{\omega(t) + \omega'(t)\}$$

$$= \cos\omega(t)\cdot\sin\omega'(t) + \sin\omega(t)\cdot\cos\omega'(t) \qquad ...(3),$$

the frequency offset unit achieves frequency offsets represented by the formula (3).
In order to achieve the above object, according to a thirteenth aspect of the present invention, there is provided the test signal generating apparatus for communications equipment according to the twelfth aspect, wherein in order to achieve the frequency offsets represented by the formula (3), the frequency offset unit comprises:

first and second multipliers (35a, 35d) which multiply the I waveform data $\cos\omega(t)$ and the Q waveform data $\sin\omega(t)$ respectively by a first frequency offset component $\cos\omega'(t)$;
third and fourth multipliers (35c, 35b) which multiply the I waveform data $\cos\omega(t)$ and the Q waveform data $\sin\omega(t)$ respectively by a second frequency offset component $\sin\omega'(t)$ ;
a first adder (36a) which outputs the first frequency offset $\cos\{\omega(t) + \omega'(t)\}$ = $-\sin\omega(t) \cdot \sin\omega'(t) + \cos\omega(t)\cos\omega'(t)$ by adding an output from the first multiplier and an output from the fourth multiplier; and
a second adder (36b) which outputs the second frequency offset $\sin\{\omega(t) + \omega'(t)\}$ = $\cos\omega(t) -\sin\omega'(t) + \sin\omega(t) \cdot \cos\omega'(t)$ by adding an output from the second multiplier and an output from the third multiplier.

In order to achieve the above object, according to a fourteenth aspect of the present invention, there is provided a test signal generating method for communications equipment, comprising:

a step of respectively storing in advance I component waveform digital data (hereinafter, referred to as I waveform data) and Q component waveform digital data (hereinafter, referred to as Q waveform data) which configure a set of digital baseband quadrature signals I and Q in at least one or more types of unit data serving as sources of a test signal to be finally output, at predetermined addresses of a pair of waveform memories (2, 3);
a step of causing a sequence memory (4a) to store in advance, first sequence information including a reading order and read addresses of the unit data including the I waveform data and the Q waveform data stored in the pair of waveform memories, and the desired signal levels to be set in the unit data including the I waveform data and the Q waveform data read from the pair of waveform memories, and second sequence information including the offset frequencies which are set for providing frequency offsets at a plurality of steps every predetermined intervals by using the predetermined carrier frequency provided to the test signal as a reference, with respect to the unit data including the I waveform data and the Q waveform data read from the pair of waveform memories;
a step of causing a sequence control unit (6a) to read the first sequence information from the sequence memory, and instruct a read control unit about the reading order and the read addresses included in the first sequence information to sequentially output the I waveform data and the Q waveform data from the pair of waveform memories;
a step of causing the sequence control unit to read the first sequence information from the sequence memory, and instruct a pair of multipliers (9, 10) about the desired signal levels included in the first sequence information in response to a timing at which the I waveform data and the Q waveform data are output from the pair of waveform memories, thereby respectively setting signal levels of the I waveform data and the Q waveform data which are sequentially output from the pair of waveform memories to the desired signal levels;
a step of causing a pair of digital-to-analog converters (19, 20) to respectively convert the I waveform data and the Q waveform data which are sequentially output from the pair of multipliers into an I waveform analog signal and a Q waveform analog signal;
a step of, at a digital stage from the pair of waveform memories up to the pair of digital-to-analog converters, causing the sequence control unit to read the second sequence information from the sequence memory, and instruct a frequency offset unit (34) about the offset frequencies included in the second sequence information to set the offset frequencies for providing frequency offsets at a plurality of steps every predetermined intervals by using the predetermined carrier frequency provided to the test signal as a reference, with respect to the unit data including the I waveform data and the Q waveform data; and

a step of causing a test signal output unit (100) to convert the I waveform analog signal and the Q waveform analog signal which are sequentially output from the pair of digital-to-analog converters into a high-frequency signal by using a carrier frequency signal after carrying out quadrature-modulation to the signals, to be output finally in form of the modulating signal and as a test signal along with frequency offsets at a plurality of steps every predetermined intervals by using the predetermined carrier frequency as a reference.

In order to achieve the above object, according to a fifteenth aspect of the present invention, there is provided the test signal generating method for communications equipment according to the fourteenth aspect, wherein

the step of setting the frequency offsets is carried out in a frequency offset unit provided between the pair of waveform memories and the pair of multipliers.

In order to achieve the above object, according to a sixteenth aspect of the present invention, there is provided the test signal generating method for communications equipment according to the fourteenth aspect, wherein

the step of setting the offset frequency information is carried out in a frequency offset unit provided between the pair of multipliers and the pair of digital-to-analog converters.

In order to achieve the above object, according to a seventeenth aspect of the present invention, there is provided the test signal generating method for communications equipment according to the fourteenth aspect, wherein the step of outputting the I waveform analog signal and the Q waveform analog signal finally in form of the modulating signal and as a test signal along with frequency offsets at a plurality of steps every predetermined intervals by using the predetermined frequency as a reference, comprises:

a step of causing a quadrature modulator (21) to output the I waveform analog signal and the Q waveform analog signal which are sequentially output from the pair of digital-to-analog converters, as a modulating signal quadrature-modulated by using a local oscillation signal from a local oscillator (21a);
a step of causing a frequency converter (22) to convert the modulating signal output from the quadrature modulator into a high-frequency signal by using a carrier frequency signal from an oscillator (23), to be output in form of the modulating signal and as a test signal along with the predetermined carrier frequency; and
a step of causing a band-pass filter (24) to eliminate unnecessary frequency components included in a test signal output from the frequency converter, to be output finally in form of the modulating signal and as a test signal along with frequency offsets at a plurality of steps every predetermined intervals by using the predetermined carrier frequency as a reference.

In order to achieve the above object, according to an eighteenth aspect of the present invention, there is provided the test signal generating method for communications equipment according to the seventeenth aspect, further comprising:

when at least the band-pass filter is provided as a component having an uneven frequency characteristic to the test signal output unit,
a step of causing the sequence memory to store in advance third sequence information which includes level offset values for setting level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequencies included in the second sequence information; and
a step of causing the sequence control unit to read the third sequence information from the sequence memory, and instruct the pair of multipliers about the level offset values included in the third sequence information in response to a timing at which the I waveform data and the Q waveform data are output from the pair of waveform memories, thereby setting level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequencies included in the second sequence information.

In order to achieve the above object, according to a nineteenth aspect of the present invention, there is provided the test signal generating method for communications equipment according to the fourteenth aspect, further comprising:

a step of causing the sequence memory to store in advance fourth sequence information including the number of repetitions of reading I waveform data and Q waveform data for each of the unit data from the pair of waveform memories in order to set the number of repetitions for each of the unit data included in the test signal to be finally output; and

a step of causing the sequence control unit to read the fourth sequence information from the sequence memory, and instruct the read control unit about the number of repetitions of reading I waveform data and Q waveform data for each of the unit data included in the fourth sequence information from the pair of waveform memories in response to a timing at which the I waveform data and the Q waveform data are output from the pair of waveform memories, thereby sequentially outputting from the pair of waveform memories the unit data continuously the number of times corresponding to the number of repetitions of reading I waveform data and Q waveform data for each of the unit data from the pair of waveform memories.

In order to achieve the above object, according to a twentieth aspect of the present invention, there is provided the test signal generating method for communications equipment according to the fourteenth aspect, wherein, in the step of causing the sequence memory to store in advance the second sequence information including the offset frequencies,

the second sequence information including the offset frequencies to be stored in the sequence memory is set as offset frequencies at which frequency hopping which enables achieving a carrier frequency of a test signal imitating a Global System for Mobile Communication (GSM) signal as the test signal is made to vary with time, whereby it is possible to achieve an interfering wave resistance test for a device to be tested in a Wideband Code Division Multiple Access (WCDMA) system by the GSM signal in such a manner that the GSM signal discretely moves within a range of received frequencies of the device to be tested in the WCDMA system.

In order to achieve the above object, according to a twenty-first aspect of the present invention, there is provided the test signal generating method for communications equipment according to the fourteenth aspect, wherein, in the step of setting signal levels of the I waveform data and the Q waveform data which are sequentially output from the pair of waveform memories to desired signal levels respectively,

the pair of multipliers are used to multiply the I waveform data and the Q waveform data output from the pair of waveform memories by a gain multiplication value determined based on the signal levels instructed by the sequence control unit, whereby signal levels of the I waveform data and the Q waveform data read from the pair of waveform memories are set to the signal levels included in the first sequence information stored in the sequence memory.

In order to achieve the above object, according to a twenty-second aspect of the present invention, there is provided the test signal generating method for communications equipment according to the eighteenth aspect, wherein, in the step of setting signal levels of the I waveform data and the Q waveform data which are sequentially output from the pair of waveform memories to desired signal levels respectively,

the pair of multipliers are used to multiply the I waveform data and the Q waveform data output from the pair of waveform memories by a gain multiplication value determined based on the level offset values included in the third sequence information, which are instructed by the sequence control unit, whereby signal levels of the I waveform data and the Q waveform data read from the pair of waveform memories are set to the level offset values included in the third sequence information stored in the sequence memory.

In order to achieve the above object, according to a twenty-third aspect of the present invention, there is provided the test signal generating method for communications equipment according to the fourteenth aspect, further comprising:

a step of preparing: a test database (27) formed in a hard disk drive having provided therein a waveform database (28) which stores the I waveform data and the Q waveform data of the unit data included in the test signal and a sequence database (29) which stores various sequence information; and a data writing unit (32) connected to the test database;

a step of downloading into the test database the I waveform data and the Q waveform data which are prepared outside to be stored in the waveform database, and the various sequence information stored in the sequence database; and

a step of causing the data writing unit to read from the waveform database the I waveform data and the Q waveform data corresponding to a test signal to be newly output to be written into the pair of waveform memories, and read sequence information corresponding to the test signal to be newly output from the sequence database to be written into the sequence memory.

In order to achieve the above object, according to a twenty-fourth aspect of the present invention, there is provided the test signal generating method for communications equipment according to the fourteenth aspect, wherein

the step of setting the offset frequencies comprises:

a step of causing a numerical control oscillator (33) to specify offset frequencies ($\omega'$) for providing frequency offsets at a plurality of steps every predetermined intervals by using as a reference the predetermined carrier frequency of the test signal, as the offset frequencies included in the second sequence information read from the sequence memory;

a step of causing the numerical control oscillator to generate a sine wave $\sin\omega'(t)$ and a cosine wave $\cos\omega'(t)$ which correspond to the offset frequencies ($\omega'$) specified by the sequence control unit to be transmitted to the frequency offset unit; and

a step of, when frequencies $\omega$ (= 2nf) of the I waveform data and the Q waveform data are offset by offset frequencies $\omega'$(= 2$\pi$f') stored in the sequence memory, causing the frequency offset unit to carry out frequency offset processing in such a manner that, when the I waveform data and the Q waveform data are respectively denoted by:

$$\mathtt{cos\omega(t),\ sin\omega(t)} \qquad\qquad \mathtt{...(1),}$$

the sine wave and cosine wave are converted respectively into:

$$\mathtt{cos\{\omega(t)\ +\ \omega'(t)\},\ sin\{\omega(t)\ +\ \omega'(t)\}} \qquad \mathtt{...(2).}$$

In order to achieve the above object, according to a twenty-fifth aspect of the present invention, there is provided the test signal generating method for communications equipment according to the twenty-fourth aspect, wherein the step of causing the frequency offset unit to carry out frequency offset processing achieves the frequency offsets represented by the formula (3) when the formula (2) is expressed by using the formula (1) and the offset frequencies ($\omega'$) to be:

$$\mathtt{cos\{\omega(t)\ +\ \omega'(t)\}}$$

$$\mathtt{=\ -sin\omega(t)\cdot sin\omega'(t)\ +\ cos\omega(t)\cdot cos\omega'(t),}$$

$$\mathtt{sin\{\omega(t)\ +\ \omega'(t)\}}$$

$$\mathtt{=\ cos\omega(t)\cdot sin\omega'(t)\ +\ sin\omega(t)\cdot cos\omega'(t)} \qquad \mathtt{...(3),}$$

In order to achieve the above object, according to a twenty-sixth aspect of the present invention, there is provided the test signal generating method for communications equipment according to the twenty-fifth aspect, wherein in order to achieve the frequency offsets represented by the formula (3), the step of causing the frequency offset unit to carry out frequency offset processing comprises:

a step of causing first and second multipliers (35a, 35d) to multiply the I waveform data $\cos\omega(t)$ and the Q waveform data $\sin\omega(t)$ respectively by a first frequency offset component $\cos\omega'(t)$;

a step of causing third and fourth multipliers (35c, 35b) to multiply the I waveform data $\cos\omega(t)$ and the Q waveform data $\sin\omega(t)$ by a second frequency offset component $\sin\omega'(t)$;

a step of causing a first adder (36a) to add an output from the first multiplier and an output from the fourth multiplier, thereby outputting the first frequency offset $\cos\{\omega(t) + \omega'(t)\} = -\sin\omega(t)\cdot\sin\omega'(t) + \cos\omega(t)\cdot\cos\omega'(t)$ ; and

a step of causing a second adder (36b) to add an output from the second multiplier and an output from the third multiplier, thereby outputting the second frequency offset $\sin\{\omega(t) + \omega'(t)\} = \cos\omega(t)\cdot\sin\omega'(t) + \sin\omega(t)\cdot\cos\omega'(t)$.

A test signal to be finally output to a test object from the test signal generating apparatus for communications equipment according to the first aspect configured as described above is generally composed of one or more types of unit data.

Accordingly, the pair of waveform memories store only I waveform data and Q waveform data which configure a set of digital baseband quadrature signals I and Q in at least one or more types of unit data serving as the source of a test signal to be finally output in the form of a modulating signal and with a predetermined carrier frequency.

Further, the sequence memory stores first sequence information including numbers denoting an output order of waveforms included in a modulating signal to be finally output as a test signal, waveform types denoting types of respective waveforms of each of the respective numbers, and read addresses of the respective waveform memories for reading I waveform data and Q waveform data of each of the respective numbers, and second sequence information including offset frequencies which are set for providing frequency offsets at a plurality of steps every predetermined intervals by using a predetermined carrier frequency provided to a test signal to be finally output as a reference, with respect to the unit data including the I waveform data and Q waveform data from the waveform memories.

As a consequence, first, I waveform data and Q waveform data of unit data are sequentially read from the respective waveform memories by the read control unit in accordance with the content of the first sequence information in the sequence memory read by the sequence control unit.

Then, the I waveform data and the Q waveform data sequentially read from the respective waveform memories are respectively converted into analog signals by the pair of digital-to-analog converters, and then quadrature-modulated at the test signal output unit, and frequencies are converted into high-frequency signals by using a carrier frequency signal. Therefore, the I waveform data and the Q waveform data are output as a test signal in the form of a modulating signal and with a predetermined carrier frequency from the test signal output unit.

According to such a configuration, a required memory capacity of the pair of waveform memories as a memory device can be kept to a minimum when respective unit data are equal.

Further, when unit data are equal, and a new test signal differing in an order of outputting unit data, a signal level, the number of repetitions, and the like is required, there is no need to newly generate waveform data themselves. It merely suffices to prepare new sequence information satisfying such conditions to be stored in the sequence memory.

Furthermore, with respect to the I waveform data and the Q waveform data sequentially read from the respective waveform memories at an offset frequency included in the second sequence information from the sequence memory read out by the sequence control unit, offset frequencies for providing frequency offsets at a plurality of steps every predetermined intervals by using as a reference a predetermined carrier frequency provided to a test signal by the frequency offset unit are set at the digital stage from the respective waveform memories to the respective digital-to-analog converters.

Consequently, with respect to a test signal to be finally output from the test signal generating apparatus, frequencies of a plurality of unit data which are included in the test signal so as to be arranged on the time axis, and which are the same or different from one another are along with predetermined offsets at the digital stage of I waveform data and Q waveform data.

Namely, the test signal to be finally output from the test signal generating apparatus is output in the form of a modulating signal and as a test signal along with frequency offsets at a plurality of steps every predetermined intervals by using a predetermined carrier signal as a reference.

More specifically, when the I waveform data and the Q waveform data along with the predetermined frequency offsets are quadrature-modulated after being converted into analog signals at the subsequent stage, and are output as a test signal whose frequency is converted based on a carrier frequency signal, these data are output as a test signal whose center frequency varies with time change so as to correspond to a frequency offset.

In this way, a test signal whose center frequency varies with time change so as to correspond to a frequency offset is set to be included in the second sequence information in the sequence memory, as an offset frequency which enables achieving frequency hopping in which a carrier frequency as a test signal imitating a GSM signal is changed in accordance with time. This makes it possible to achieve an interfering wave resistance test for a device to be tested in a WCDMA system by the GSM signal due to the GSM signal imitatively moving within a range of reception frequency of the device to be tested in the WCDMA system.

Offset frequencies, which are set for providing frequency offsets at a plurality of steps every predetermined intervals by using a predetermined carrier frequency of the test signal as a reference, are included in the unit data including the I waveform data and the Q waveform data in the second sequence information in the sequence memory. As a result, sizes of waveform data required for achieving frequency hopping can be reduced as much as possible.

For example, when a test signal imitating a GSM signal is output under the condition that a frequency band of a test signal at the time of achieving frequency hopping is 200 kHz and an output time is 1 sec, there is a considerable difference in a required size of waveform data depending whether or not there is the frequency offset function as described above.

Namely, when there is the frequency offset function, it suffices to prepare only signals of offset 0 MHz : 800 kbyte. In contrast thereto, when there is no frequency offset function, it is necessary to prepare signals of offset 10 MHz : 101 Mbyte.

Accordingly, by providing the frequency offset function, a memory capacity of a pair of waveform memories as a memory device required for achieving such frequency hopping can be kept to a minimum.

Further, assuming that a test signal is output whose center frequency varies with time change so as to correspond to a frequency offset. In such a case, when a component having an uneven frequency characteristic, such as a band-pass filter (BPF), a quadrature modulator or an amplifier, is incorporated into the test signal output unit at the subsequent stage of the test signal generating apparatus, it is necessary to compensate a level fluctuation attributable to all or some frequency characteristics thereof.

Then, in order to compensate for a level fluctuation attributable to the frequency characteristics, in the test signal generating apparatus for communications equipment according to the fifth aspect, third sequence information is stored in the sequence memory. The third sequence information includes level offset values for setting level offset values based on a signal level at the predetermined carrier frequency serving as the reference to be greater, as there becomes greater an absolute value of the offset frequencies for providing frequency offsets at a plurality of steps every predetermined intervals by using as a reference a predetermined carrier frequency provided to a test signal as the offset frequencies included in the second sequence information.

In addition, a signal level of each unit data in a test signal is changed by a level offset value corresponding to the frequency characteristics described above by the pair of multipliers at the digital stage of the I waveform data and the Q waveform data, based on a level offset value included in the third sequence information from the sequence memory read by the sequence control unit.

Accordingly, even if a frequency of each unit data of a test signal is changed, it is possible to maintain the frequency characteristics of the test signal generating apparatus in its entirety to be constant.

Further, in the test signal generating apparatus configured according to the sixth aspect, it is possible to repeatedly output the same or a plurality of unit data which are arranged on the time axis of a test signal output from the test signal generating apparatus, by a predetermined number of times.

Namely, by setting the number of times of repeatedly outputting unit data into the sequence information, it is easily achieve execution of frequency shift of a test signal every unit data.

As described above, in the test signal generating apparatus of the present invention, data of a test signal to be output are to be at least one or more types of unit data. Only I waveform data and Q waveform data in the unit data are stored in the pair of waveform memories, and the I waveform data and the Q waveform data are read from the pair of waveform memories based on the sequence information of the test signal to be output.

Consequently, a required memory capacity of the pair of waveform memories to be used as a memory device can be kept to a minimum while maintaining a signal level of the test signal output from the test signal generating apparatus to be a high accuracy. This makes it possible to reduce a manufacturing cost of the test signal generating apparatus in its entirety, and to greatly reduce a workload on an operator.

Brief Description of Drawings

FIG. 1A is a block diagram shown for explaining a schematic configuration of a first embodiment of a test signal generating apparatus for communications equipment according to the invention.

FIG. 1B is a block diagram shown for explaining a schematic configuration of a second embodiment of the test signal generating apparatus for communications equipment according to the invention.

FIG. 1C is a block diagram shown for explaining a schematic configuration of a third embodiment of the test signal generating apparatus for communications equipment according to the invention.

FIG. 1D is a block diagram shown for explaining a schematic configuration of a fourth embodiment of the test signal generating apparatus for communications equipment according to the invention.

FIG. 2 is a table shown for explaining memory contents in a sequence memory 4a provided in the test signal generating apparatus of FIGS. 1A and 1C.

FIG. 3A is a graph shown for explaining a relationship between a frequency characteristic and a modulating signal level in the test signal generating apparatus of FIG. 1A.

FIG. 3B is a graph shown for explaining a relationship between a frequency characteristic and a modulating signal level in the test signal generating apparatus of FIG. 1A.

FIG. 4 is a diagram shown for explaining frequency hopping of GSM signals for use in an interfering wave resistance test executed in a prior art and the present invention.

FIG. 5 is a diagram shown for explaining memory contents in a pair of waveform memories 2 and 3 formed in the test signal generating apparatus of FIG. 1A.

FIG. 6 is a diagram shown for explaining a frequency offset of a test signal in the test signal generating apparatus of FIG. 1A.

FIG. 7 is a block diagram shown for explaining a detailed configuration of a frequency offset unit 34 incorporated in the test signal generating apparatus of FIG. 1A.

FIG. 8 is a diagram shown for explaining a configure of a test signal output from a frequency converter 22 incorporated in the test signal generating apparatus of FIG. 1A.

FIG. 9 is a table shown for explaining memory contents in a sequence memory 4b provided in the test signal generating apparatus of FIGS. 1B and 1D.

FIG. 10 is a diagram shown for explaining a configuration of a test signal output from the test signal generating apparatus of FIG. 1B.

Best Mode for Carrying Out the Invention Hereinafter, several embodiments of the present invention will be described with reference to the drawings.

(First Embodiment)

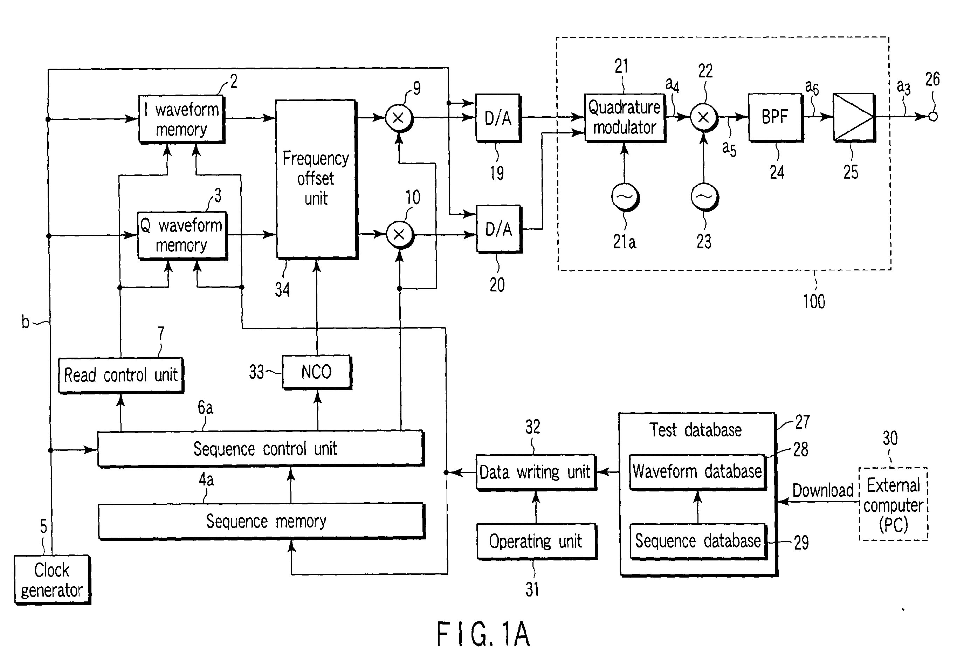

First, a first embodiment of a test signal generating apparatus for communications equipment according to the present invention will be concretely described with reference to FIGS. 1A, and 2 to 8.

FIG. 1A is a block diagram showing a schematic configuration of the first embodiment according to the test signal generating apparatus for communications equipment of the invention.

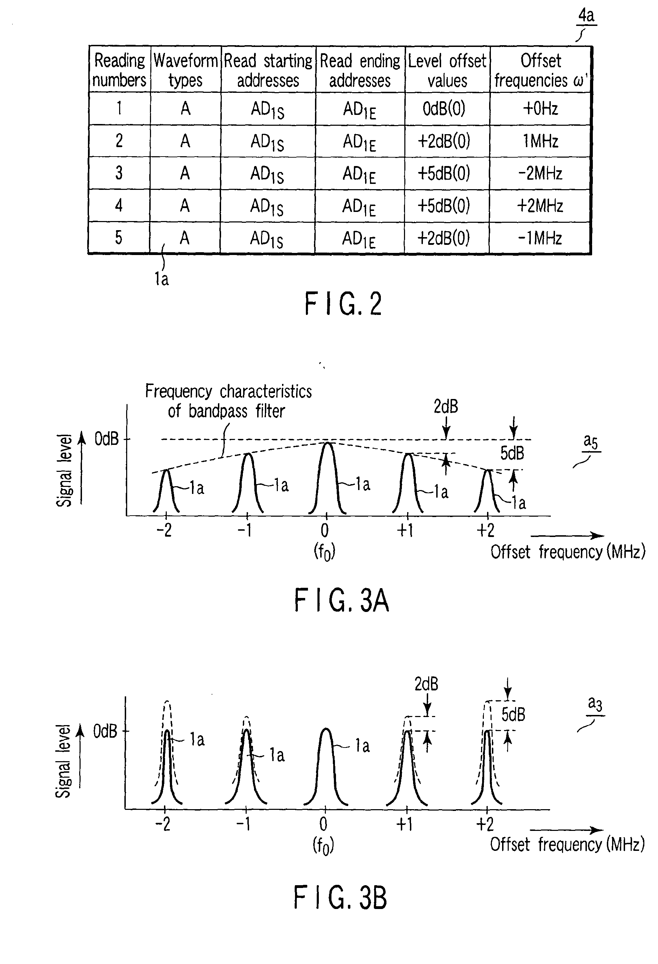

FIG. 2 is a table shown for explaining memory contents in a sequence memory 4a provided in the test signal generating apparatus of FIG. 1A.

FIGS. 3A and 3B are graphs shown for explaining a relationship between a frequency characteristic and a modulating signal level in the test signal generating apparatus of FIG. 1A.

FIG. 4 is a diagram shown for explaining frequency hopping of GSM signals for use in an interfering wave resistance test executed in the present invention.

FIG. 5 is a diagram shown for explaining memory contents in a pair of waveform memories 2 and 3 formed in the test signal generating apparatus of FIG. 1A.

FIG. 6 is a diagram shown for explaining a frequency offset of a test signal in the test signal generating apparatus of FIG. 1A.

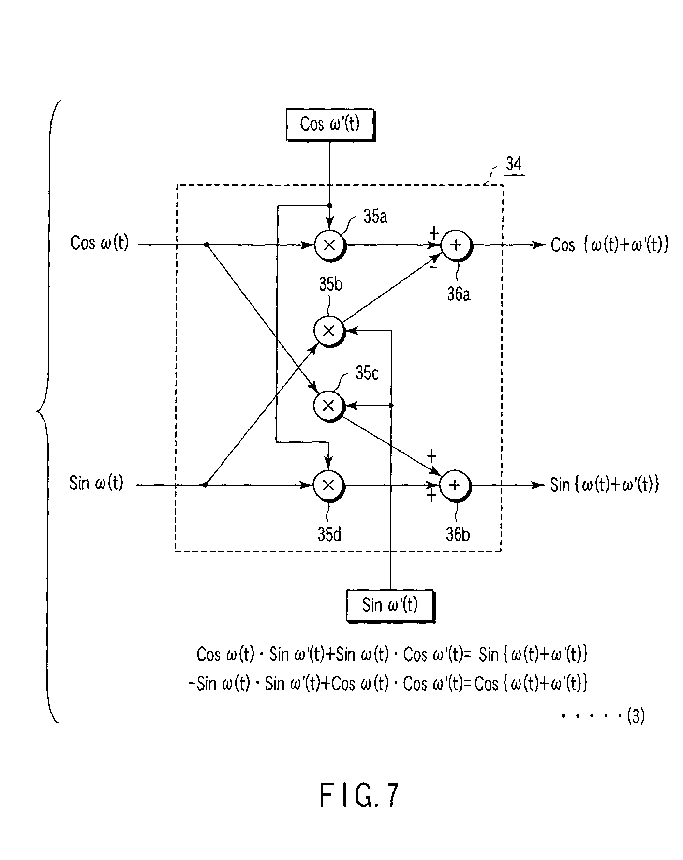

FIG. 7 is a block diagram shown for explaining a detailed configuration of a frequency offset unit 34 incorporated in the test signal generating apparatus of FIG. 1A.

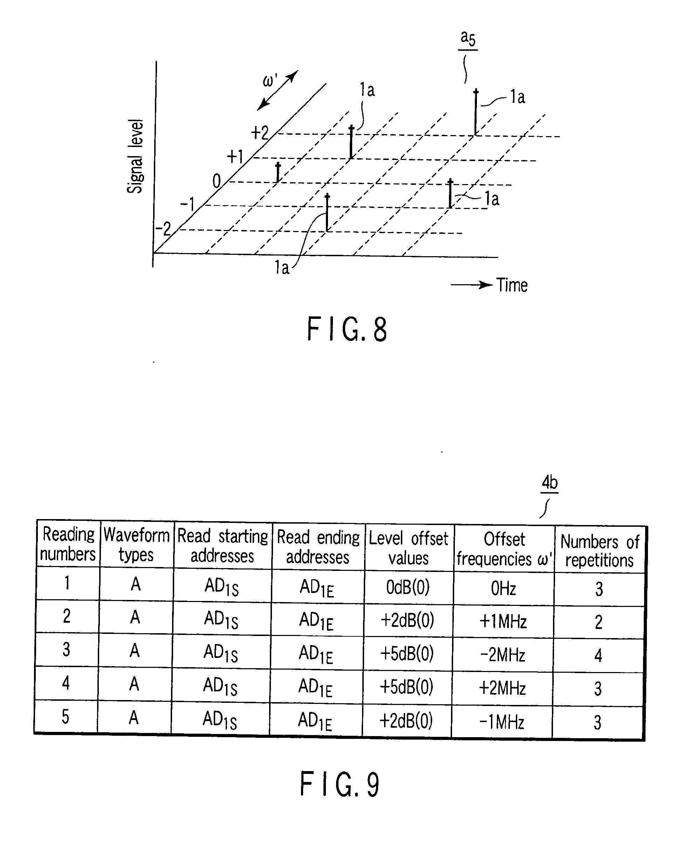

FIG. 8 is a diagram shown for explaining a configuration of a test signal output from a frequency converter 22 incorporated in the test signal generating apparatus of FIG. 1A.

The test signal generating apparatus for communications equipment according to the first embodiment is basically, as shown in FIGS. 1A, and 2 to 8, configured so as to have: a pair of waveform memories 2, 3 in which I component waveform digital data (hereinafter, referred to as I waveform data) and Q component waveform digital data (hereinafter, referred to as Q waveform data) which configure a set of digital baseband quadrature signals I and Q in at least one or more types of unit data serving as sources of a test signal to be finally output, are respectively stored in advance at predetermined addresses; a read control unit 7 to sequentially output the I waveform data and the Q waveform data from the pair of waveform memories 2, 3; a pair of multipliers 9, 10 to set signal levels of the I waveform data and the Q waveform data which are sequentially output from the pair of waveform memories 2, 3 to desired signal levels by the read control unit 7, respectively; a pair of digital-to-analog converters 19, 20 which convert the I waveform data and the Q waveform data which are sequentially output from the pair of multipliers 9, 10 into an I waveform analog signal and a Q waveform analog signal, respectively; a frequency offset unit 34 which sets offset frequencies for providing frequency offsets at a plurality of steps every predetermined intervals by using a predetermined carrier frequency provided to the test signal as a reference, with respect to the I waveform data and the Q waveform data between the pair of waveform memories 2, 3 and the pair of digital-to-analog converters 19, 20; a sequence memory 4a which stores in advance first sequence information including a reading order and read addresses of the unit data including the I waveform data and the Q waveform data stored in the pair of waveform memories 2, 3, and the desired signal levels to be set in the unit data including the I waveform data and the Q waveform data read from the pair of waveform memories 2, 3, and second sequence information including the offset frequencies set for providing frequency offsets at a plurality of steps every predetermined intervals by using the predetermined carrier frequency provided to the test signal as a reference, with respect to the unit data including the I waveform data and the Q waveform data read from the pair of waveform memories 2, 3; a sequence control unit 6a which reads the first sequence information from the sequence memory 4a, instructs the read control unit 7 about the reading order and the read addresses included in the first sequence information thereby causing to sequentially output the I waveform data and the Q waveform data from the pair of waveform memories 2, 3, and instructs the pair of multipliers 9, 10 about the desired signal levels included in the first sequence information in response to a timing at which the I waveform data and the Q waveform data are output from the pair of waveform memories 2, 3 thereby causing to set signal levels of the I waveform data and the Q waveform data which are sequentially output from the pair of waveform memories 2, 3 respectively to the desired signal levels, and further reads the second sequence information from the sequence memory 4a, and instructs the frequency offset unit 34 about the offset frequencies included in the second sequence information thereby causing to set the offset frequencies for providing frequency offsets at a plurality of steps every predetermined intervals by using the predetermined carrier frequency provided to the test signal as a reference, with respect to the unit data including the I waveform data and the Q waveform data; and

a test signal output unit 100 which converts the I waveform analog signal and the Q waveform data signal which are sequentially output from the pair of digital-to-analog converters 19, 20 into a high-frequency signal by using a carrier frequency signal after carrying out quadrature modulation to the signals, thereby causing to output the high-frequency signal finally in form of the modulating signal and as a test signal along with frequency offsets at a plurality of steps every predetermined intervals by using the predetermined frequency as a reference.

Further, the test signal generating method for communications equipment according to the first embodiment is basically, as shown in FIGS. 1A and 2 to 8, configured so as to have: a step of respectively storing in advance I component waveform digital data (hereinafter, referred to as I waveform data) and Q component waveform digital data (hereinafter, referred to as Q waveform data) which configure a set of digital baseband quadrature signals I and Q in at least one or more types of unit data serving as sources of a test signal to be finally output, at predetermined addresses of a pair of waveform memories 2, 3; a step of causing a sequence memory 4a to store in advance: first sequence information including a reading order and read addresses of the unit data including the I waveform data and the Q waveform data stored in the pair of waveform memories 2, 3, and the desired signal levels to be set in the unit data including the I waveform data and the Q waveform data read from the pair of waveform memories 2, 3; and second sequence information including the offset frequencies which are set for providing frequency offsets at a plurality of steps every predetermined intervals by using the predetermined carrier frequency provided to the test signal as a reference, with respect to the unit data including the I waveform data and the Q waveform data read from the pair of waveform memories 2, 3; a step of causing a sequence control unit 6a to read the first sequence information from the sequence memory 4a, and instruct a read control unit about the reading order and the read addresses included in the first sequence information to sequentially output the I waveform data and the Q waveform data from the pair of waveform memories 2, 3; a step of causing the sequence control unit 6a to read the first sequence information from the sequence memory 4a, and instruct a pair of multipliers 9, 10 about the desired signal levels included in the first sequence information in response to a timing at which the I waveform data and the Q waveform data are output from the pair of waveform memories 2, 3, thereby respectively setting signal levels of the I waveform data and the Q waveform data which are sequentially output from the pair of waveform memories 2, 3 to the desired signal levels; a step of causing a pair of digital-to-analog converters 19, 20 to respectively convert the I waveform data and the Q waveform data which are sequentially output from the pair of multipliers 9, 10 into an I waveform analog signal and a Q waveform analog signal; a step of, at a digital stage from the pair of waveform memories 2, 3 up to the pair of digital-to-analog converters 19, 20, causing the sequence control unit 6a to read the second sequence information from the sequence memory 4a, and instruct a frequency offset unit 34 about the offset frequencies included in the second sequence information to set the offset frequencies for providing frequency offsets at a plurality of steps every predetermined intervals by using the predetermined carrier frequency provided to the test signal as a reference, with respect to the unit data including the I waveform data and the Q waveform data; and a step of causing a test signal output unit 100 to convert the I waveform analog signal and the Q waveform analog signal which are sequentially output from the pair of digital-to-analog converters 19, 20 into a high-frequency signal by using a carrier frequency signal after carrying out quadrature-modulation to the signals, to be output finally in form of the modulating signal and as a test signal along with frequency offsets at a plurality of steps every predetermined intervals by using the predetermined carrier frequency as a reference.

Specifically, the test signal generating apparatus shown in FIG. 1A is incorporated into a mobile network simulator device for executing a communication test for a communications equipment such as a mobile communication terminal, for example, the mobile telephone described above, to thereby output a modulating signal serving as a test signal to the mobile telephone serving as a test object.

In the test signal generating apparatus for communications equipment according to the first embodiment, with respect to a modulating signal $a_3$ finally output as a test signal from an output terminal 26, frequencies f of five unit data 1a which are sequentially output with time are offset at predetermined frequency intervals up and down ($\pm 1$ MHz, $\pm 2$ MHz) with respect to the reference frequency f0, as shown by the solid lines of FIG. 3B.

Such a modulating signal $a_3$ output as a test signal is, as described by using FIG. 4, used for an interfering wave resistance test for a WCDMA mobile telephone by achieving frequency hopping in which a frequency (a carrier frequency, i.e., the reference frequency f0) of a test signal imitating a GSM signal is made to vary with time.

Namely, the second sequence information including offset frequencies, which are used in the first embodiment, to be stored in the sequence memory 4a which will be described later is set as offset frequencies which enable achieving frequency hopping in which a carrier frequency f of a test signal imitating a GSM signal is made to vary with time. As a result, it is possible to achieve an interfering wave resistance test for a device to be tested in a WCDMA system by the GSM signal in such a manner that the GSM signal discretely moves within a reception range of the device to be tested in the WCDMA system.

In FIG. 1A, in the I waveform memory 2 and the Q waveform memory 3 which configure a pair of waveform memories, there are respectively stored in advance in predetermined storage addresses I component waveform digital data (hereinafter, referred to as I waveform data) and Q component waveform digital data (hereinafter, referred to as Q waveform data) which configure a set of digital baseband quadrature signals I and Q in at least one or more types of unit data 1a serving as the sources of a test signal to be output finally in the form of a modulating signal and with a predetermined carrier frequency f0,.

Namely, in the I waveform memory 2, digital I waveform data in the unit data 1a of the modulating signal $a_3$ serving as a test signal which is finally output from the output terminal 26 of the test signal generating apparatus is stored in advance into a read starting address $AD_{1S}$ to a read ending address $AD_{1E}$ corresponding to the predetermined storage addresses, as shown in FIG. 2 which will be described later.

Further, in the Q waveform memory 3, digital Q waveform data in the unit data 1a of the modulating signal $a_3$ serving as a test signal which is finally output from the output terminal 26 of the test signal generating apparatus are stored in advance into a read starting address $AD_{1S}$ to a read ending address $AD_{1E}$ corresponding to the predetermined storage addresses, as shown in FIG. 2 which will be described later.

Then, in FIG. 1A, in the sequence memory 4a, first sequence information and second sequence information are stored as shown in FIG. 2. The first sequence information includes: numbers from 1 to 53 denoting an output order of the respective waveforms included in the modulating signal $a_3$ to be finally output as a test signal; waveform types 1a denoting types of the respective waveforms (here, all those are A) from 1 to 5; and read starting addresses $AD_{1S}$ and read ending addresses $AD_{1E}$ in the waveform memories 2 and 3 for reading I waveform data and Q waveform data from the respective waveform memories 2 and 3 for each of the respective waveform types 1a. The second sequence information includes offset frequencies $\omega'$ (= $2\pi f'$, $\pm 1$ MHz, $\pm 2$ MHz) which are set for providing frequency offsets at a plurality of steps every predetermined intervals by using a predetermined carrier frequency (f) provided to the test signal to be finally output as a reference, with respect to unit data including the I waveform data and the Q waveform data which are read from the waveform memories 2 and 3.

When, in the test signal generating apparatus, at least a band-pass filter 24 is provided as a component having an uneven frequency characteristic in the test signal output unit 100 which will be described later, third sequence information is stored in the sequence memory 4a. The third sequence information includes level offset values for setting level offset values from a signal level (0 dB) at the predetermined carrier frequency $f_0$ serving as a transmission reference to be greater (+2 dB, +5 dB), as there becomes greater an absolute value of offset frequencies ($\pm 1$ MHz, $\pm 2$ MHz) for providing frequency offsets at a plurality of steps every predetermined intervals by using as a reference a predetermined carrier frequency $f_0$ provided to a test signal as the offset frequencies included in the second sequence information.

Then, the sequence control unit 6a which will be described later is configured so as to read the third sequence information from the sequence memory 4a, and to instruct the pair of multipliers 9 and 10 about the level offset values included in the third sequence information in response to a timing at which I waveform data and Q waveform data are output from the waveform memories 2 and 3, to set level offset values from a signal level (transmission reference level = 0 dB) at the predetermined carrier frequency f0 serving as a reference to be greater (+2 dB, +5 dB), as there becomes greater an absolute value of offset frequencies ($\pm 1$ MHz, $\pm 2$ MHz) for providing frequency offsets at a plurality of steps every predetermined intervals by using as a reference a predetermined carrier frequency $f_0$ provided to a test signal as the offset frequencies included in the second sequence information.

Here, with reference to FIG. 3A, description will be given to the reason for that a level set value from the transmission reference level (= 0 dB) is set to be greater, as an absolute value of offset frequencies becomes greater.

As described above, when the test signal output unit 100 of the test signal generating apparatus is provided with a plurality of components such as the band-pass filer (BPF) 24, the quadrature modulator 21, the frequency converter 22, and the amplifier 25, whose frequency characteristics are uneven, it is necessary to compensate the total frequency characteristics of the plurality of components in the frequency characteristics of the entire modulating signal $a_3$ composed of five unit data 1a whose frequency bandwidths are broadened, serving as a test signal output from the test signal output unit 100.

Namely, as the frequency characteristics shown in FIG. 3A, the signal levels of the unit data 1a fall (-2 dB, -5 dB) as those are separated away from the predetermined carrier frequency f0 serving as a reference which will be a center frequency of the test signal. For this reason, in order to compensate for such frequency characteristics, a level offset value is set to be great in advance such that the signal levels of the respective unit data 1a are made to be higher (+2 dB, +5 dB) in accordance with offset frequencies $\omega'$ ($\pm 1$ MHz, $\pm 2$ MHz) of the unit data 1a.

More specifically, as an absolute value of offset frequencies $\omega'$ ($\pm 1$ MHz, $\pm 2$ MHz) becomes greater, a level offset value from the transmission reference level 0 dB is set to be greater (+2 dB, +5 dB).

Next, the entire operation of FIG. 1A will be described.

First, the sequence control unit 6a reads the first sequence information from the sequence memory 4a, and instructs the read control unit 7 about numbers from 1 to 5 as a reading order and read (starting, ending) addresses of the unit data including: waveforms A included in a modulating signal $a_3$, which is included in the first sequence information, to be finally output as a test signal; and the I waveform data and the Q waveform data which are stored in the waveform memories 2 and 3 for storing I waveform data and Q waveform data for each of the unit data 1a of the waveforms A.

In this manner, the read control unit 7 specifies read starting addresses $AD_{1S}$ and reading ending addresses $AD_{1E}$ of the I waveform data and the Q waveform data in the waveform memories 2 and 3 in order to read the respective unit data 1a from 1 to 5 in order from the waveform memories 2 and 3 so as to be synchronous with a clock b from a clock generating unit 5.

At the same time, the sequence control unit 6a reads the second sequence information from the sequence memory 4a, and reads an offset frequency in each of the respective unit data 1a based on an offset frequency included in the second sequence information, thereby specifying the read offset frequency to a numerical control oscillator (NCO) 3.

Moreover, the sequence control unit 6a reads the third sequence information from the sequence memory 4a, and sets a level offset value of unit data 1a of a corresponding number included in the third sequence information into the multipliers 9 and 10.

Note that, when there is no need to compensate frequency characteristics by level offsets as described above, all the level offset values of the respective unit data 1a stored in advance in the sequence memory 4a are set to the transmission reference level 0 dB as the predetermined signal level stored in advance in the sequence memory 4a.

The NCO 33 generates a sine wave $\sin\omega(t)$ and a cosine wave $\cos\omega(t)$ which correspond to specified offset frequencies $\omega$, and transmits those to the frequency offset unit 34.

The frequency offset unit 34 is provided between the pair of waveform memories 2 and 3 and the pair of multipliers 9 and 10 in a case of FIG. 1A, at the digital stage from the pair of waveform memories 2 and 3 and the pair of digital-to-analog converters 19 and 20. For this reason, as will be described later, the frequency offset unit 34 sets offset frequencies for providing frequency offsets at a plurality of steps every predetermined intervals by using the predetermined carrier frequency of a test signal as a reference, with respect to I waveform data and Q waveform data.

The read control unit 7 reads I waveform data and Q waveform data between the read starting address and the read ending address from the respective waveform memories 2 and 3 based on read starting address and read ending address specified as described above.

In this manner, I waveform data and Q waveform data between the specified read starting address and read ending address specified are sequentially output from the waveform memories 2 and 3.

Then, the I waveform data and the Q waveform data sequentially output from the waveform memories 2 and 3 are input to the frequency offset unit 34.

The frequency offset unit 34 offsets frequencies $\omega$ (= $2\pi f$) of the I waveform data and Q waveform data sequentially output from the waveform memories 2 and 3 by offset frequencies $\omega'$ (= $2\pi f'$) stored in the sequence memory 4a.

Specifically, when the I waveform data and the Q waveform data are respectively denoted by:

$$\cos\omega(t), \ \sin\omega(t) \qquad\qquad\qquad …(1),$$

these are respectively converted into:

$$\cos\{\omega(t) + \omega'(t)\}, \ \sin\{\omega(t) + \omega'(t)\} \qquad …(2).$$

Formula (2) can be expressed by the following formula (3) by using formula (1) and an offset frequency $\omega$:

$$-\sin\omega(t)\cdot\sin\omega'(t) + \cos\omega(t)\cdot\cos\omega'(t)$$

$$= \cos\{\omega(t) + \omega'(t)\} \ (\text{First frequency offset})$$

$$\cos\omega(t)\cdot\sin\omega'(t) + \sin\omega(t)\cdot\cos\omega'(t)$$

$$= \sin\{\omega(t) + \omega'(t)\} \ (\text{Second frequency offset}) \ …(3)$$

In order to achieve the frequency offsets represented by the formula (3), the frequency offset unit 34 is composed of, for example, as shown in FIG. 7, first to fourth multipliers 35a, 35b, 35c, and 35d, and first and second adders 36a and 36b.

Namely, the frequency offset unit 34 has: the first and second multipliers 35a and 35d which multiply I waveform data $\cos\omega(t)$ and Q waveform data $\sin\omega(t)$ by a first frequency offset component $\cos\omega'(t)$; the third and fourth multipliers 35c and 35b which multiply I waveform data $\cos\omega(t)$ and Q waveform data $\sin\omega(t)$ by a second frequency offset component $\sin\omega'(t)$; the first adder 36a which adds an output from the first multiplier 35a and an output from the fourth multiplier 35b to thereby output the first frequency offset $\cos\{\omega(t) + \omega'(t)\} = -\sin\omega(t)\cdot\sin\omega'(t) + \cos\omega(t) \cdot \cos\omega'(t)$; and the second adder 36b which adds an output from the second multiplier 35d and an output from the third multiplier 35c to thereby output the second frequency offset sin $\{\omega(t) + \omega'(t)\}$ = -cos$\omega(t) \cdot$ sin$\omega'$ (t) + sin$\omega(t) \cdot$ cos$\omega'(t)$.

In this way, the I waveform data and the Q waveform whose frequencies are offset at the frequency offset unit 34 are respectively input to the respective multipliers 9 and 10.

The respective multipliers 9 and 10 increase the signal levels of the I waveform data and the Q waveform data along with frequency offsets output from the frequency offset unit 34 by an amount of a level offset value (+2 dB of +5 dB) which is set from the sequence control unit 6a as shown by the broken lines in FIG. 3B, in order to set a level offset value from the transmission reference level (0 dB) to be greater as an absolute value of an offset frequency becomes greater as described above.

The I waveform data and the Q waveform data whose levels have been set by the respective multipliers 9 and 10 are input to the pair of digital-to-analog converters 19 and 20, respectively.

The respective digital-to-analog converters 19 and 20 convert the input digital I waveform data and Q waveform data along with frequency offsets into analog I waveform signal and Q waveform signal, and transmits the signals to the quadrature modulator 21 configuring the test signal output unit 100.

The quadrature modulator 21 quadrature-modulates the analog I waveform data and Q waveform data subjected to digital-to-analog conversion by using a local oscillation signal from a local oscillator 21a, into a modulating signal $a_4$ along with frequency offsets to be transmitted to the frequency converter 22.

The frequency converter 22 converts the modulating signal $a_4$ into a high-frequency signal by multiplying the modulating signal $a_4$ along with frequency offsets which is output form the quadrature modulator 21 by a carrier frequency signal from the oscillator 23, and transmits it as a new modulating signal $a_5$ to the band-pass filter (BPF) 24.

Note that a frequency difference (offset frequency $\omega'$) among the respective unit data 1a in the modulating signal $a_5$, which is converted into a high-frequency signal by multiplying a carrier frequency signal by the frequency converter 22, and is output to the BPF 24, remains as it is as shown in FIG. 6.

FIG. 8 shows a relationship among output times (an output order) of five unit data 1a included in the modulating signal $a_5$ before being input to the BPF 24, offset frequencies $\omega'$, and signal levels.

As shown in FIG. 8, the greater absolute value of the offset frequencies $\omega'$ the signal has, the greater the signal levels thereof become.

The BPF 24 having frequency characteristics as shown in FIG. 3A eliminates unnecessary frequency components from the modulating signal $a_5$, and transmits it as a new modulating signal $a_6$ to the amplifier 25.

Accordingly, the modulating signal $a_6$ is amplified in the amplifier 25, and output as a final modulating signal $a_3$ (test signal) from the output terminal 26.

In the test signal generating apparatus according to the first embodiment configured in this way, frequencies of a plurality of unit data 1a arranged on the time axis of a modulating signal $a_3$ which is finally output as a test signal from the test signal generating apparatus are offset by the frequency offset unit 34 at the digital stage of I waveform data and Q waveform data.

Therefore, due to this frequency offset, a center frequency of the modulating signal $a_3$ subjected to quadrature-modulation to be converted into a high-frequency signal by a carrier frequency signal varies with time change.

An offset frequency $\omega'$ for providing the frequency offsets can be arbitrarily set as one item of the sequence information in the same manner as other conditions into the sequence memory 4a.

Consequently, as described above, it is easily possible to achieve frequency hopping in which a frequency (carrier frequency) of a test signal is randomly changed with time.

Moreover, by level offset, signal levels of the respective unit data 1a are changed by a level offset value corresponding to the frequency characteristic of the BPF 24 at the digital stage of I waveform data and Q waveform data.

Even if the frequencies of the respective unit data 1a in a modulating signal $a_3$ are changed, the frequency characteristics of the entire modulating signal $a_3$ output via the BPF 24 can be maintained to be flat. This makes it possible to improve the signal quantity in the modulating signal $a_3$ to be finally output as a test signal.

Note that, a test database (database) 27 formed in a hard disk drive (HDD) in the test signal generating apparatus is provided with: a waveform database 28 for storing I waveform data and Q waveform data of unit data of a test signal output form the test signal generating apparatus; and a sequence database 29 for storing various sequence information.

The I waveform data and the Q waveform data of the unit data, and various sequence data which are stored in the waveform database 28 and the sequence database 29 are prepared by an external computer 30 such as a PC (personal computer) installed at the outside of the test signal generating apparatus, and downloaded into the waveform database 28 and the sequence database 29 in the test database 27.

Then, when a new test signal is output from the test signal generating apparatus, a test executant operates an operating unit 31 to cause a data writing unit 32 to read I waveform data and Q waveform data corresponding to the new test signal from the waveform database 28, and write these data into the respective waveform memories 2 and 3.

At the same time, the test executant causes it to read sequence information corresponding to the new test signal from the sequence database 29, and write the information into the sequence memory 4a.

When a plurality of test signals whose frequencies are different from one another are output as the new test signals, it suffices to merely write sequence information every frequency of each test signal into the sequence memory 4. Therefore, there is no need to write I waveform data and Q waveform data corresponding to the plurality of test signals whose frequencies are different from one another into the respective waveform memories 2 and 3.

Namely, because a write time for sequence information is extremely shorter as compared with rewrite of I waveform data and Q waveform data, a test operation efficiency can be greatly improved.

(Second Embodiment)

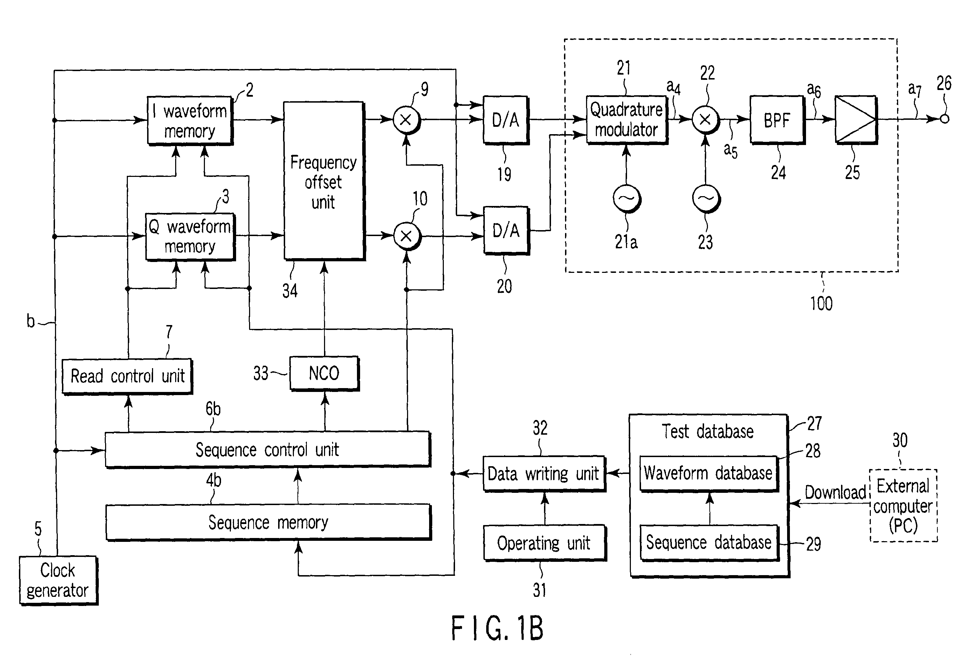

Next, a second embodiment of the test signal generating apparatus for communications equipment according to the present invention will be specifically described with reference to FIGS. 1B, 9 and 10.

FIG. 1B is a block diagram showing a schematic configuration relating to the test signal generating apparatus for communications equipment according to the second embodiment of the invention.

FIG. 9 is a diagram shown for explaining memory contents in a sequence memory 4b provided in the test signal generating apparatus of FIG. 1B.

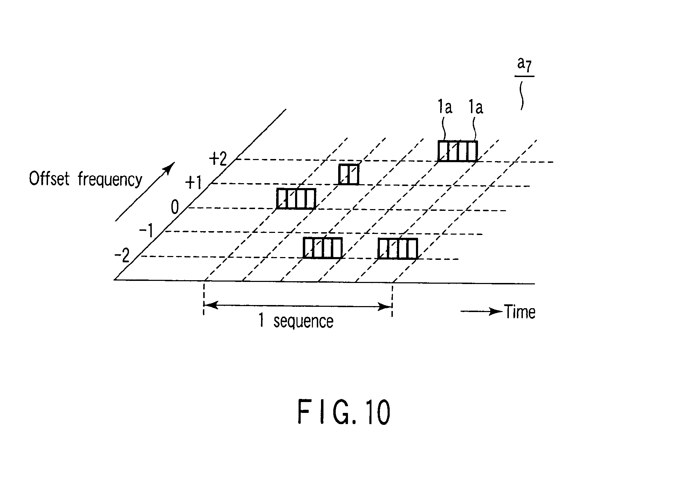

FIG. 10 is a diagram shown for explaining a configuration of a test signal output from the test signal generating apparatus of FIG. 1B.

In FIG. 1B, the same components as those of the test signal generating apparatus for communications equipment according to the first embodiment shown in FIG. 1A are denoted by the same reference numerals, and detailed descriptions of the overlapped portions will be omitted.

Then, the test signal generating apparatus for communications equipment according to the second embodiment shown in FIG. 1B is different from the test signal generating apparatus for communications equipment according to the first embodiment shown in FIG. 1A in that a sequence memory 4b and a sequence control unit 6b which are respectively different from the sequence memory 4a and the sequence control unit 6a in FIG. 1A are provided.

FIG. 9 is a table shown for explaining memory contents of the sequence memory unit 4b provided in the test signal generating apparatus according to the second embodiment of the invention.

In this sequence memory 4b, in the same manner as the sequence memory 4a in the first embodiment, there is stored first (to third) sequence information including: numbers from 1 to 5 denoting an output order of the respective waveforms included in a modulating signal $a_3$ to be finally output as a test signal; waveform types denoting types of respective waveforms of each of the respective numbers; storage addresses (read starting addresses, read ending addresses) in the respective waveform memories 2 and 3 for reading I waveform data and Q waveform data of each of the respective numbers; and offset frequencies which are set in order to provide frequency offsets at a plurality of steps every predetermined intervals by using a predetermined carrier frequency provided to a test signal to be finally output as a reference, with respect to the unit data including the I waveform data and the Q waveform data read from the respective waveform memories 2 and 3. In addition, second (fourth) sequence information including the number of repetitions of reading I waveform data and Q waveform data in each unit data 1a from the respective waveform memories 2 and 3 for setting the number of repetitions of unit data included in a test signal are stored.

Then, in the test signal generating apparatus for communications equipment according to the second embodiment, sequence information as described above is read from the sequence memory 4b by the sequence control unit 6b. Consequently, in particular, by the second (fourth) sequence information including the number of repetitions of reading I waveform data and Q waveform data in each unit data 1a from the respective waveform memories 2 and 3, a modulating signal $a_7$ as a test signal in which a plurality of unit data 1a having a same offset frequency continue timewise in accordance with the set number of repetitions of reading is to be finally output from the test signal generating apparatus, as shown in FIG. 10.

Namely, in the test signal generating apparatus according to the second embodiment, execution of a frequency offset for each of a plurality of unit data can be easily achieved by setting the execution in advance as the number of repetitions of reading in the sequence memory 4b as sequence information.

The other configurations in the test signal generating apparatus for communications equipment according to the second embodiment are the same as those in the test signal generating apparatus according to the first embodiment described above.

(Third Embodiment)

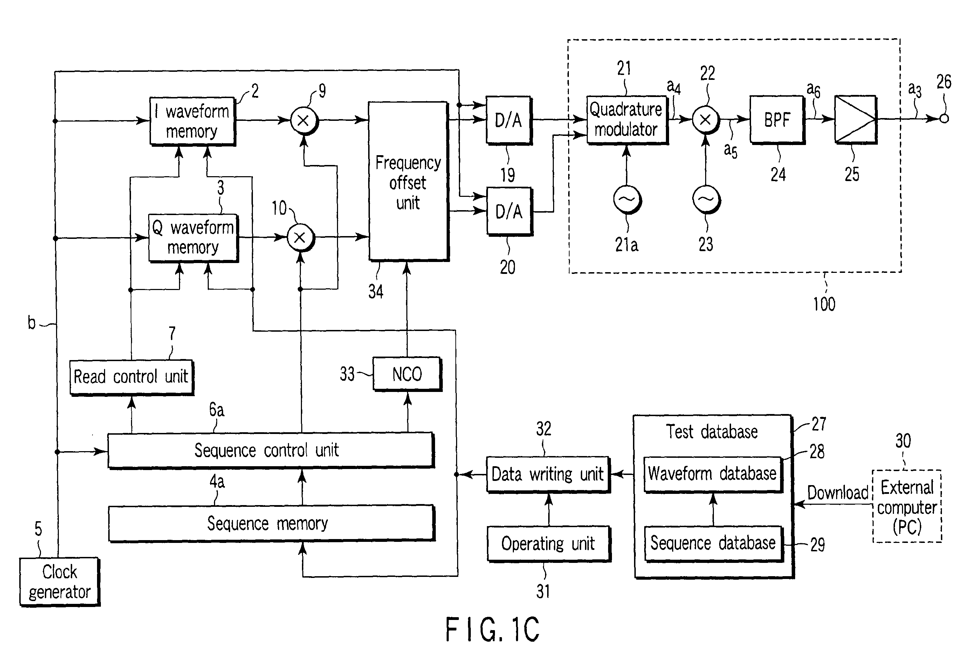

Next, a third embodiment of the test signal generating apparatus for communications equipment according to the present invention will be concretely described with reference to FIG. 1C.

FIG. 1C is a block diagram showing a schematic configuration of the third embodiment relating to the test signal generating apparatus for communications equipment of the present invention.

In FIG. 1C, the same components as those of the test signal generating apparatus for communications equipment according to the first embodiment shown in FIG. 1A are denoted by the same reference numerals, and detailed descriptions of the overlapped portions will be omitted.

Then, the test signal generating apparatus for communications equipment of the third embodiment shown in FIG. 1B is different from the test signal generating apparatus for communications equipment of the first embodiment shown in FIG. 1A in that a frequency offset unit 34 is provided at the digital stage from the pair of waveform memories 2 and 3 up to the pair of digital-to-analog converters 19 and 20, in particular, between the pair of multipliers 9 and 10 and the pair of digital-to-analog converters 19 and 20.

In the same manner as that of the test signal generating apparatus according to the first embodiment, the frequency offset unit 34 sets offset frequencies for providing frequency offsets at a plurality of steps every predetermined intervals by using the predetermined carrier frequency of a test signal as a reference, with respect to I waveform data and Q waveform data.

In FIG. 1C, the sequence memory 4a and the sequence control unit 6a same as those in FIG. 1A are provided, and the numerical control oscillator (NCO) 33 is provided between the frequency offset unit 34 and the sequence control unit 6a.

Accordingly, in the test signal generating apparatus for communications equipment according to the third embodiment, with respect to a modulating signal $a_3$ to be finally output as a test signal from the output terminal 26, frequencies f of five unit data 1a which are sequentially output with time are offset at predetermined steps up or down with respect to the reference frequency f0 as shown by solid lines of FIG. 3B, in the same manner as in the test signal generating apparatus according to the first embodiment.

In this case, the I waveform data and the Q waveform data sequentially output from the respective waveform memories 2 and 3 are not directly input to the frequency offset unit 34 unlike the test signal generating apparatus according to the first embodiment, but input to the frequency offset unit 34 after signal levels for level offsets are respectively set via the respective multipliers 9 and 10.

The other configurations in the test signal generating apparatus for communications equipment according to the third embodiment are the same as those in the test signal generating apparatus according to the second embodiment described above.

(Fourth Embodiment)

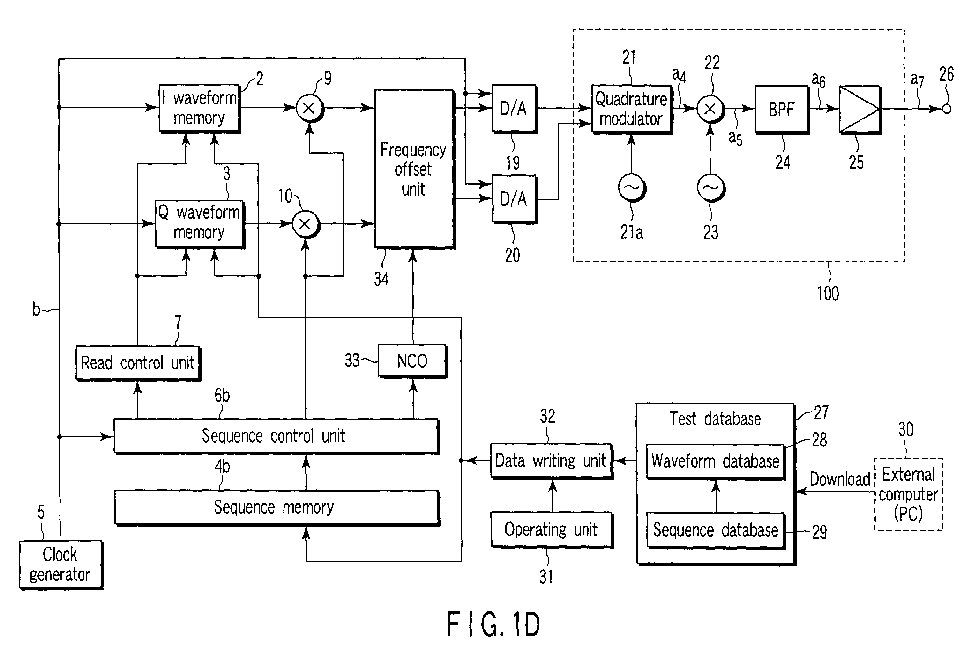

Next, a fourth embodiment of the test signal generating apparatus for communications equipment according to the present invention will be concretely described with reference to FIG. 1D.

FIG. 1D is a block diagram showing a schematic configuration relating to the test signal generating apparatus for communications equipment according to the fourth embodiment of the invention.

In FIG. 1D, the same components as those of the test signal generating apparatus for communications equipment according to the third embodiment shown in FIG. 1C are denoted by the same reference numerals, and detailed descriptions of the overlapped portions will be omitted.

Then, the test signal generating apparatus for communications equipment according to the fourth embodiment shown in FIG. 1D is different from the test signal generating apparatus for communications equipment according to the third embodiment shown in FIG. 1C in that a sequence memory 4b and a sequence control unit 6b which are respectively different from the sequence memory 4a and the sequence control unit 6a in FIG. 1C are provided.

Accordingly, in the test signal generating apparatus for communications equipment according to the fourth embodiment, in the same manner as in the test signal generating apparatus for communications equipment according to the second embodiment, a modulating signal a7 as a test signal in which a plurality of unit data 1a having a same offset frequency timewise continue is to be finally output.

In the test signal generating apparatus for communications equipment according to the fourth embodiment shown in FIG. 1D, in the same manner as in the test signal generating apparatus for communications equipment according to the third embodiment shown in FIG. 1C, there is provided a frequency offset unit 34 inserted at the digital stage from the pair of waveform memories 2 and 3 up to the pair of digital-to-analog converters 19 and 20, in particular, between the pair of multipliers 9 and 10 and the pair of digital-to-analog converters 19 and 20.

As in the same as that of the test signal generating apparatus according to the third embodiment described above, the frequency offset unit 34 sets offset frequencies for providing frequency offsets at a plurality of steps every predetermined intervals by using the predetermined carrier frequency of a test signal as a reference, with respect to I waveform data and Q waveform data.

In FIG. 1D, the numerical control oscillator (NCO) 33 is provided between the frequency offset unit 34 and the sequence control unit 6a, in the same manner as in FIG. 1C.

In this case, the I waveform data and the Q waveform data sequentially output from the respective waveform memories 2 and 3 are not directly input to the frequency offset unit 34 unlike the test signal generating apparatus according to the first embodiment, but input to the frequency offset unit 34 after signal levels for level offsets are respectively set via the respective multipliers 9 and 10.

The other configurations in the test signal generating apparatus for communications equipment according to the fourth embodiment are the same as those in the test signal generating apparatus according to the second embodiment.

As described above in detail, according to the present invention, it is possible to provide, in order to solve the problems in the prior art, a test signal generating apparatus for communications equipment and a test signal generating method for communications equipment which can keep a required memory capacity of a memory device to a minimum, and can greatly reduce an operation of generating signal waveforms of test signals, and can handle even when same data is repeatedly used several times while insuring a high-level accuracy in each hopping frequency.

**Claims**

1. A test signal generating apparatus for communications equipment, comprising:

   a pair of waveform memories (2,3) in which inphase component waveform digital data, waveform data, and quadrature component waveform digital data, , Q waveform data, which configure a set of digital baseband quadrature signals I and Q in at least one or more types of unit data serving as sources of a test signal to be finally output, are respectively stored in advance at predetermined addresses;
   a read control unit (7) to sequentially output the I waveform data and the Q waveform data from the pair of waveform memories;
   a pair of multipliers (9,10) to set signal levels of the I waveform data and the Q waveform data which are sequentially output from the pair of waveform memories to desired signal levels by the read control unit, respectively;
   a pair of digital-to-analog converters (19,20) which convert the I waveform data and the Q waveform data which are sequentially output from the pair of multipliers into an I waveform analog signal and a Q waveform analog signal, respectively;
   a frequency offset unit (34) which sets offset frequencies for providing frequency offsets at a plurality of steps every predetermined intervals by using a predetermined carrier frequency provided to the test signal as a reference, with respect to the I waveform data and the Q waveform data between the pair of waveform memories and the pair of digital-to-analog converters;
   a sequence memory (4a) which stores in advance: first sequence information including a reading order and read addresses of the unit data including the I waveform data and the Q waveform data stored in the pair of waveform memories, and the desired signal levels to be set in the unit data including the I waveform data and the Q waveform data read from the pair of waveform memories; and second sequence information including the offset frequencies set for providing frequency offsets at a plurality of steps every predetermined intervals by using the predetermined carrier frequency provided to the test signal as a reference, with respect to the unit data including the I waveform data and the Q waveform data read from the pair of waveform memories;
   a sequence control unit (6a) which reads the first sequence information from the sequence memory, instructs the read control unit about the reading order and the read addresses included in the first sequence information thereby causing to sequentially output the I waveform data and the Q waveform data from the pair of waveform memories; and instructs the pair of multipliers about the desired signal levels included in the first sequence information in response to a timing at which the I waveform data and the Q waveform data are output from the pair of waveform memories thereby causing to set signal levels of the I waveform data and the Q waveform data which are sequentially output from the pair of waveform memories respectively to the desired signal levels; and further reads the second sequence information from the sequence memory, and instructs the frequency offset unit about the offset frequencies included in the second sequence information thereby causing to set the offset frequencies for providing frequency offsets at a plurality of steps every predetermined intervals by using the predetermined carrier frequency provided to the test signal as a reference, with respect to the unit data including the I waveform data and the Q waveform data; and
   a test signal output unit (100) which converts the I waveform analog signal and the Q waveform data signal which are sequentially output from the pair of digital-to-analog converters into a high-frequency signal by using a carrier frequency signal after carrying out quadrature modulation to the signals, thereby causing to output the high-frequency signal finally in form of the modulating signal and as a test signal along with frequency offsets at a plurality of steps every predetermined intervals by using the predetermined frequency as a reference.

2. The test signal generating apparatus for communications equipment according to claim 1, **characterized in that** the frequency offset unit is provided between the pair of waveform memories and the pair of multipliers.

3. The test signal generating apparatus for communications equipment according to claim 1, **characterized in that**

the frequency offset unit is provided between the pair of multipliers and the pair of digital-to-analog converters.

4. The test signal generating apparatus for communications equipment according to claim 1, **characterized in that** the test signal output unit comprises:

a quadrature modulator which quadrature-modulates the I waveform analog signal and the Q waveform analog signal which are sequentially output from the pair of digital-to-analog converters by using a local oscillation signal from a local oscillator, to be output as a modulating signal;
a frequency converter which converts the modulating signal output from the quadrature modulator into a high-frequency signal by using a carrier frequency signal from an oscillator, to be output in form of the modulating signal and as a test signal along with a predetermined carrier frequency; and
a band-pass filter which eliminates unnecessary frequency components included in the test signal output from the frequency converter, thereby causing to output the test signal finally in form of the modulating signal and as a test signal along with offset frequencies at a plurality of steps every predetermined intervals by using the predetermined carrier frequency as a reference.

5. The test signal generating apparatus for communications equipment according to claim 4, **characterized in that** when at least the band-pass filter is provided as a component having an uneven frequency characteristic to the test signal output unit,

the sequence memory stores in advance third sequence information including level offset values for setting level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequencies included in the second sequence information, and

the sequence control unit reads the third sequence information from the sequence memory, and instructs the pair of multipliers about the level offset values included in the third sequence information in response to a timing at which the I waveform data and the Q waveform data are output from the pair of waveform memories, thereby causing to set level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequency information included in the second sequence information.

6. The test signal generating apparatus for communications equipment according to claim 1, **characterized in that** the sequence memory stores in advance fourth sequence information including the number of repetitions of reading I waveform data and Q waveform data for each of the unit data from the pair of waveform memories in order to set the number of repetitions for each of the unit data included in the test signal to be finally output, and

the sequence control unit reads the fourth sequence information from the sequence memory, and instructs the read control unit about the number of repetitions of reading I waveform data and Q waveform data for each of the unit data included in the fourth sequence information from the pair of waveform memories in response to a timing at which the I waveform data and the Q waveform data are output from the pair of waveform memories, thereby causing to sequentially output from the pair of waveform memories the unit data continuously the number of times corresponding to the number of repetitions of reading I waveform data and Q waveform data for each of the unit data from the pair of waveform memories.

7. The test signal generating apparatus for communications equipment according to claim 1, **characterized in that** the second sequence information including offset frequencies to be stored in the sequence memory is set as offset frequencies which enable to achieve frequency hopping which enables achieving a carrier frequency f of a test signal imitating a Global System for Mobile Communication (GSM) signal as the test signal is made to vary with time, whereby it is possible to achieve an interfering wave resistance test for a device to be tested in a Wideband Code Division Multiple Access (WCDMA) system by means of the GSM signal in such a manner that the GSM signal discretely moves within a range of received frequencies of the device to be tested in the WCDMA system.

8. The test signal generating apparatus for communications equipment according to claim 1, **characterized in that** the pair of multipliers multiply the I waveform data and the Q waveform data output from the pair of waveform memories by a gain multiplication value determined based on the signal levels instructed by the sequence control unit, thereby causing to set signal levels of the I waveform data and the Q waveform data output from the pair of waveform memories to the signal levels included in the first sequence information which is stored in the sequence memory.

9. The test signal generating apparatus for communications equipment according to claim 5, **characterized in that** the pair of multipliers multiply the I waveform data and the Q waveform data output from the pair of waveform memories by a gain multiplication value determined based on the level offset values included in the third sequence information, the level offset values being instructed by the sequence control unit, thereby causing to set signal levels of the I waveform data and the Q waveform data read from the pair of waveform memories to the level offset values included in the third sequence information which is stored in the sequence memory.

10. The test signal generating apparatus for communications equipment according to claim 1, **characterized by** further comprising:

a test database formed in a hard disk drive having provided therein a waveform database which stores I waveform data and Q waveform data of the unit data included in the test signal and a sequence database which stores various sequence information; and
a data writing unit connected to the test database, wherein
the I waveform digital data and the Q waveform digital data stored in the waveform database, and the various sequence information stored in the sequence database are prepared outside, and downloaded into the test database, and
when I waveform digital data and Q waveform digital data corresponding to a test signal to be newly output are read from the waveform database via the data writing unit and written into the pair of waveform memories, and at the same time, sequence information corresponding to the test signal to be newly output is read from the sequence database and written into the sequence memory.

11. The test signal generating apparatus for communications equipment according to claim 1, **characterized by** further comprising:

a numerical control oscillator which causes the sequence control unit to specify, as the offset frequencies included in the second sequence information read from the sequence memory, offset frequencies ($\omega$') for providing frequency offsets at a plurality of steps every predetermined intervals by using the predetermined carrier frequency provided to the test signal as a reference, wherein
the numerical control oscillator generates a sine wave $\sin\omega$'(t) and a cosine wave $\cos\omega$'(t) which correspond to the offset frequencies ($\omega$') specified by the sequence control unit, and transmits those to the frequency offset unit, and
when frequencies $\omega$ (= $2\pi f$) of the I waveform data and the Q waveform data are offset by offset frequencies $\omega$' (= $2\pi f$') stored in the sequence memory, the frequency offset unit carries out frequency offset processing in such a manner that, when the I waveform data and the Q waveform data are respectively denoted by:

$$\cos\omega(t), \ \sin\omega(t) \qquad\qquad\qquad \ldots(1),$$

the sine wave and cosine wave are converted respectively into:

$$\cos\{\omega(t) + \omega'(t)\}, \ \sin\{\omega(t) + \omega'(t)\} \qquad \ldots(2).$$

12. The test signal generating apparatus for communications equipment according to claim 11, **characterized in that** when the formula (2) is expressed by using the formula (1) and the offset frequencies ($\omega$') to be:

$$\cos\{\omega(t) + \omega'(t)\}$$
$$= -\sin\omega(t)\cdot\sin\omega'(t) + \cos\omega(t)\cdot\cos\omega'(t),$$
$$\sin\{\omega(t) + \omega'(t)\}$$
$$= \cos\omega(t)\cdot\sin\omega'(t) + \sin\omega(t)\cdot\cos\omega'(t) \qquad \ldots(3),$$

the frequency offset unit achieves frequency offsets represented by the formula (3).

13. The test signal generating apparatus for communications equipment according to claim 12, **characterized in that** in order to achieve the frequency offsets represented by the formula (3), the frequency offset unit comprises:

first and second multipliers which multiply the I waveform data cosω(t) and the Q waveform data sinω(t) respectively by a first frequency offset component cosω'(t) ;
third and fourth multipliers which multiply the I waveform data cosω(t) and the Q waveform data sinω(t) respectively by a second frequency offset component sinω'(t) ;
a first adder which outputs the first frequency offset cos{ω(t) + ω'(t)} = -sinω(t) · sinω' (t) + cosω(t) · cosω'(t) by adding an output from the first multiplier and an output from the fourth multiplier; and
a second adder which outputs the second frequency offset sin{ω(t) + ω'(t)} = cosω(t) · sinω' (t) + sinω(t) · cosω'(t) by adding an output from the second multiplier and an output from the third multiplier.

14. A test signal generating method for communications equipment, comprising:

a step of respectively storing in advance inphase component waveform digital data, waveform data, and quadrature component waveform digital data, waveform data, which configure a set of digital baseband quadrature signals I and Q in at least one or more types of unit data serving as sources of a test signal to be finally output, at predetermined addresses of a pair of waveform memories (2, 3) ;
a step of causing a sequence memory (4a) to store in advance, first sequence information including a reading order and read addresses of the unit data including the I waveform data and the Q waveform data stored in the pair of waveform memories, and the desired signal levels to be set in the unit data including the I waveform data and the Q waveform data read from the pair of waveform memories, and second sequence information including the offset frequencies which are set for providing frequency offsets at a plurality of steps every predetermined intervals by using the predetermined carrier frequency provided to the test signal as a reference, with respect to the unit data including the I waveform data and the Q waveform data read from the pair of waveform memories;
a step of causing a sequence control unit (6a) to read the first sequence information from the sequence memory, and instruct a read control unit about the reading order and the read addresses included in the first sequence information to sequentially output the I waveform data and the Q waveform data from the pair of waveform memories;
a step of causing the sequence control unit to read the first sequence information from the sequence memory, and instruct a pair of multipliers (9,10) about the desired signal levels included in the first sequence information in response to a timing at which the I waveform data and the Q waveform data are output from the pair of waveform memories, thereby respectively setting signal levels of the I waveform data and the Q waveform data which are sequentially output from the pair of waveform memories to the desired signal levels;
a step of causing a pair of digital-to-analog converters (19, 20) to respectively convert the I waveform data and the Q waveform data which are sequentially output from the pair of multipliers into an I waveform analog signal and a Q waveform analog signal;
a step of, at a digital stage from the pair of waveform memories up to the pair of digital-to-analog converters, causing the sequence control unit to read the second sequence information from the sequence memory, and instruct a frequency offset unit (34) about the offset frequencies included in the second sequence information to set the offset frequencies for providing frequency offsets at a plurality of steps every predetermined intervals by using the predetermined carrier frequency provided to the test signal as a reference, with respect to the unit data including the I waveform data and the Q waveform data; and
a step of causing a test signal output unit (100) to convert the I waveform analog signal and the Q waveform analog signal which are sequentially output from the pair of digital-to-analog converters into a high-frequency signal by using a carrier frequency signal after carrying out quadrature-modulation to the signals, to be output finally in form of the modulating signal and as a test signal along with frequency offsets at a plurality of steps every predetermined intervals by using the predetermined carrier frequency as a reference.

15. The test signal generating method for communications equipment according to claim 14, **characterized in that** the step of setting the frequency offsets is carried out in a frequency offset unit provided between the pair of waveform memories and the pair of multipliers.

16. The test signal generating method for communications equipment according to claim 14, **characterized in that** the step of setting the offset frequency information is carried out in a frequency offset unit provided between the pair of multipliers and the pair of digital-to-analog converters.

**17.** The test signal generating method for communications equipment according to claim 14, **characterized in that** the step of outputting the I waveform analog signal and the Q waveform analog signal finally in form of the modulating signal and as a test signal along with frequency offsets at a plurality of steps every predetermined intervals by using the predetermined frequency as a reference, comprises:

a step of causing a quadrature modulator to output the I waveform analog signal and the Q waveform analog signal which are sequentially output from the pair of digital-to-analog converters, as a modulating signal quadrature-modulated by using a local oscillation signal from a local oscillator;

a step of causing a frequency converter to convert the modulating signal output from the quadrature modulator into a high-frequency signal by using a carrier frequency signal from an oscillator, to be output in form of the modulating signal and as a test signal along with the predetermined carrier frequency; and

a step of causing a band-pass filter to eliminate unnecessary frequency components included in a test signal output from the frequency converter, to be output finally in form of the modulating signal and as a test signal along with frequency offsets at a plurality of steps every predetermined intervals by using the predetermined carrier frequency as a reference.

**18.** The test signal generating method for communications equipment according to claim 17, **characterized by** further comprising:

when at least the band-pass filter is provided as a component having an uneven frequency characteristic to the test signal output unit,

a step of causing the sequence memory to store in advance third sequence information which includes level offset values for setting level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequencies included in the second sequence information; and

a step of causing the sequence control unit to read the third sequence information from the sequence memory, and instruct the pair of multipliers about the level offset values included in the third sequence information in response to a timing at which the I waveform data and the Q waveform data are output from the pair of waveform memories, thereby setting level offset values from a signal level at the predetermined carrier frequency serving as the reference to be greater, as there becomes greater an absolute value of offset frequencies for providing frequency offsets at a plurality of steps every predetermined intervals by using as a reference the predetermined carrier frequency provided to the test signal as the offset frequencies included in the second sequence information.

**19.** The test signal generating method for communications equipment according to claim 14, **characterized by** further comprising:

a step of causing the sequence memory to store in advance fourth sequence information including the number of repetitions of reading I waveform data and Q waveform data for each of the unit data from the pair of waveform memories in order to set the number of repetitions for each of the unit data included in the test signal to be finally output; and

a step of causing the sequence control unit to read the fourth sequence information from the sequence memory, and instruct the read control unit about the number of repetitions of reading I waveform data and Q waveform data for each of the unit data included in the fourth sequence information from the pair of waveform memories in response to a timing at which the I waveform data and the Q waveform data are output from the pair of waveform memories, thereby sequentially outputting from the pair of waveform memories the unit data continuously the number of times corresponding to the number of repetitions of reading I waveform data and Q waveform data for each of the unit data from the pair of waveform memories.

**20.** The test signal generating method for communications equipment according to claim 14, **characterized in that**, in the step of causing the sequence memory to store in advance the second sequence information including the offset frequencies,

the second sequence information including the offset frequencies to be stored in the sequence memory is set as offset frequencies at which frequency hopping which enables achieving a carrier frequency of a test signal imitating a Global System for Mobile Communication (GSM) signal as the test signal is made to vary with time, whereby it is possible to achieve an interfering wave resistance test for a device to be tested in a Wideband Code Division Multiple Access (WCDMA) system by the GSM signal in such a manner that the GSM signal discretely moves within a range of received frequencies of the device to be tested in the WCDMA system.

21. The test signal generating method for communications equipment according to claim 14, **characterized in that**, in the step of setting signal levels of the I waveform data and the Q waveform data which are sequentially output from the pair of waveform memories to desired signal levels respectively,

the pair of multipliers are used to multiply the I waveform data and the Q waveform data output from the pair of waveform memories by a gain multiplication value determined based on the signal levels instructed by the sequence control unit, whereby signal levels of the I waveform data and the Q waveform data read from the pair of waveform memories are set to the signal levels included in the first sequence information stored in the sequence memory.

22. The test signal generating method for communications equipment according to claim 18, **characterized in that**, in the step of setting signal levels of the I waveform data and the Q waveform data which are sequentially output from the pair of waveform memories to desired signal levels respectively,

the pair of multipliers are used to multiply the I waveform data and the Q waveform data output from the pair of waveform memories by a gain multiplication value determined based on the level offset values included in the third sequence information, which are instructed by the sequence control unit, whereby signal levels of the I waveform data and the Q waveform data read from the pair of waveform memories are set to the level offset values included in the third sequence information stored in the sequence memory.

23. The test signal generating method for communications equipment according to claim 14, **characterized by** further comprising:

a step of preparing: a test database formed in a hard disk drive having provided therein a waveform database which stores the I waveform data and the Q waveform data of the unit data included in the test signal and a sequence database which stores various sequence information; and a data writing unit connected to the test database;

a step of downloading into the test database the I waveform data and the Q waveform data which are prepared outside to be stored in the waveform database, and the various sequence information stored in the sequence database; and

a step of causing the data writing unit to read from the waveform database the I waveform data and the Q waveform data corresponding to a test signal to be newly output to be written into the pair of waveform memories, and read sequence information corresponding to the test signal to be newly output from the sequence database to be written into the sequence memory.

24. The test signal generating method for communications equipment according to claim 14, **characterized in that** the step of setting the offset frequencies comprises:

a step of causing a numerical control oscillator to specify offset frequencies ($\omega'$) for providing frequency offsets at a plurality of steps every predetermined intervals by using as a reference the predetermined carrier frequency of the test signal, as the offset frequencies included in the second sequence information read from the sequence memory;

a step of causing the numerical control oscillator to generate a sine wave $\sin\omega'(t)$ and a cosine wave $\cos\omega'(t)$ which correspond to the offset frequencies ($\omega'$) specified by the sequence control unit to be transmitted to the frequency offset unit; and

a step of, when frequencies $\omega$ (= $2\pi f$) of the I waveform data and the Q waveform data are offset by offset frequencies $\omega'$(= $2\pi f'$) stored in the sequence memory, causing the frequency offset unit to carry out frequency offset processing in such a manner that, when the I waveform data and the Q waveform data are respectively denoted by:

$$\cos\omega(t), \ \sin\omega(t) \qquad\qquad …(1),$$

the sine wave and cosine wave are converted respectively into:

$$\cos\{\omega(t) + \omega'(t)\}, \ \sin\{\omega(t) + \omega'(t)\} \qquad \ldots(2).$$

25. The test signal generating method for communications equipment according to claim 24, **characterized in that** the step of causing the frequency offset unit to carry out frequency offset processing achieves the frequency offsets represented by the formula (3) when the formula (2) is expressed by using the formula (1) and the offset frequencies (ω') to be:

$$\cos\{\omega(t) + \omega'(t)\}$$
$$= -\sin\omega(t)\cdot\sin\omega'(t) + \cos\omega(t)\cdot\cos\omega'(t),$$
$$\sin\{\omega(t) + \omega'(t)\}$$
$$= \cos\omega(t)\cdot\sin\omega'(t) + \sin\omega(t)\cdot\cos\omega'(t) \qquad \ldots(3),$$

26. The test signal generating method for communications equipment according to claim 25, **characterized in that** in order to achieve the frequency offsets represented by the formula (3), the step of causing the frequency offset unit to carry out frequency offset processing comprises:

a step of causing first and second multipliers to multiply the I waveform data cosω(t) and the Q waveform data sinω(t) respectively by a first frequency offset component cosω'(t) ;
a step of causing third and fourth multipliers to multiply the I waveform data cosω(t) and the Q waveform data sinω(t) by a second frequency offset component sinω'(t) ;
a step of causing a first adder to add an output from the first multiplier and an output from the fourth multiplier, thereby outputting the first frequency offset cos{ω(t) + ω'(t)} = -sinω(t) · sinω' (t) + cosω(t) · cosω'(t) ; and
a step of causing a second adder to add an output from the second multiplier and an output from the third multiplier, thereby outputting the second frequency offset sin{ω(t) + ω'(t)} = cosω(t) · sinω'(t) + sinω(t) · cosω'(t).

**Patentansprüche**

1. Vorrichtung zum Erzeugen eines Testsignals für ein Kommunikationsgerät, aufweisend:

ein Paar von Wellenformspeichern (2, 3), in denen Inphase-Komponenten-Wellenform-Digitaldaten, I-Wellenformdaten, und Quadratur-Komponenten-Wellenform-Digitaldaten, Q-Wellenformdaten, die einen Satz von digitalen Basisband-Quadratur-Signalen I und Q in mindestens einem oder mehreren Typen von Einheitsdaten konfigurieren, die als Quellen eines letztlich auszugebenden Testsignals dienen, jeweils im Voraus an im Voraus bestimmten Adressen gespeichert werden;
eine Lesesteuereinheit (7) zur sequenziellen Ausgabe der I-Wellenformdaten und der Q-Wellenformdaten von dem Paar Wellenformspeichern;
ein Paar von Multiplizierern (9, 10) zum Festlegen der Signalpegel der I-Wellenformdaten und der Q-Wellenformdaten, die jeweils sequenziell von der Lesesteuereinheit ausgegeben werden;
ein Paar von Digital-Analog-Wandlern (19, 20), die die I-Wellenformdaten und die Q-Wellenformdaten, die sequenziell von dem Paar von Multiplizierern jeweils in ein analoges I-Wellenformsignal und ein analoges Q-Wellenformsignal ausgegeben werden;
eine Frequenzoffseteinheit (34), die Offsetfrequenzen festlegt, zum Bereitstellen von Frequenzoffsets bei mehreren Schritten zu allen im Voraus bestimmten Intervallen durch Anwenden einer im Voraus bestimmten Trägerfrequenz, die dem Testsignal als eine Referenz in Bezug auf die I-Wellenformdaten und die Q-Wellenformdaten zwischen dem Paar von Wellenformspeichern und dem Paar von Digital-Analog-Wandlern bereitgestellt wird;
einen Sequenzspeicher (4a), der im Voraus Folgendes speichert: erste Sequenzinformation, umfassend eine Lesereihenfolge und Leseadressen der Einheitsdaten, die die I-Wellenformdaten und die Q-Wellenformdaten umfassen, die in dem Paar von Wellenformspeichern gespeichert sind, und die gewünschten Signalpegel, die in den Einheitsdaten einschließlich der vom Paar von Wellenformspeichern gelesenen I-Wellenformdaten und die Q-Wellenformdaten festgelegt sind; und zweite Sequenzinformation, einschließlich der Offsetfrequenzen, die für das Bereitstellen von Frequenzoffsets bei mehreren Schritten zu allen im Voraus bestimmten Intervallen durch Anwenden einer im Voraus bestimmten Trägerfrequenz festgelegt sind, die dem Testsignal als eine Referenz in Bezug auf die von dem Paar von Wellenformspeichern gelesenen in den I-Wellenformdaten und den Q-Wellenformdaten enthaltenen bereitgestellt wird;

eine Sequenzsteuereinheit (6a), die die erste Sequenzinformation vom Sequenzspeicher liest, die Lesesteuereinheit über die Lesereihenfolge und die in der ersten Sequenzinformation enthaltenen Leseadressen anweist und dabei eine sequenzielle Ausgabe der I-Wellenformdaten und der Q-Wellenformdaten von dem Paar von Wellenformspeichern bewirkt; und das Paar von Multiplizierern über die in der ersten Sequenzinformation enthaltenen gewünschten Signalpegel als Reaktion auf eine Zeitregelung, zu der die I-Wellenformdaten und die Q-Wellenformdaten von dem Paar von Wellenformspeichern ausgegeben werden und dabei ein Festlegen der Signalpegel der jeweils sequenziell von dem Paar von Wellenformspeichern ausgegebenen I-Wellenformdaten und der Q-Wellenformdaten bewirken, anweist; und die ferner die zweite Sequenzinformation vom Sequenzspeicher liest, und die die Frequenzoffseteinheit über die in der zweiten Sequenzinformation enthaltenen Offsetfrequenzen anweist, und dabei ein Einstellen der Offsetfrequenzen zum Bereitstellen von Frequenzoffsets bei mehreren Schritten zu allen im Voraus bestimmten Intervallen durch Anwenden einer im Voraus bestimmten Trägerfrequenz, die dem Testsignal als eine Referenz in Bezug auf die Einheitsdaten einschließlich der I-Wellenformdaten und der Q-Wellenformdaten bereitgestellt wird, bewirken; und

eine Testsignalausgabeeinheit (100), die das I-Wellenform-Analogsignal und das Q-Wellenform-Datensignal, die sequenziell von dem Paar von Digital-Analog-Wandlern ausgegeben werden, durch Anwenden eines Trägerfrequenzsignals nach Ausführen einer Quadraturmodulation an den Signalen, in ein Hochfrequenzsignal umwandelt, dabei bewirkend eine Ausgabe des Hochfrequenzsignals schließlich in Form des modulierenden Signals und als ein Testsignal zusammen mit Frequenzoffsets bei mehreren Schritten zu allen im Voraus bestimmten Intervallen durch Anwenden der im Voraus bestimmten Frequenz als Referenz.

2. Vorrichtung zum Erzeugen eines Testsignals für ein Kommunikationsgerät nach Anspruch 1, **dadurch gekennzeichnet, dass**
die Frequenzoffseteinheit zwischen dem Paar von Wellenformspeichern und dem Paar von Multiplizierern bereitgestellt ist.

3. Vorrichtung zum Erzeugen eines Testsignals für ein Kommunikationsgerät nach Anspruch 1, **dadurch gekennzeichnet, dass**
die Frequenzoffseteinheit zwischen dem Paar von Multiplizierern und dem Paar von Digital-Analog-Wandlern bereitgestellt ist.

4. Vorrichtung zum Erzeugen eines Testsignals für ein Kommunikationsgerät nach Anspruch 1, **dadurch gekennzeichnet, dass**
die Testsignalausgabeeinheit Folgendes aufweist:

einen Quadraturmodulator, der das I-Wellenform-Analogsignal und das Q-Wellenform-Datensignal, die sequenziell von dem Paar von Digital-Analog-Wandlern ausgegeben werden, durch Anwenden eines lokalen Oszillatorsignals von einem lokalen Oszillator für eine Ausgabe als ein modulierendes Signal quadraturmoduliert;
einen Frequenzwandler, der das vom Quadraturmodulator ausgegebene modulierende Signal durch Anwenden eines Trägerfrequenzsignals von einem Oszillator in ein Hochfrequenzsignal für Ausgabe in Form des modulierenden Signals und als Testsignal zusammen mit einer im Voraus bestimmten Trägerfrequenz umwandelt; und
ein Bandpassfilter, das in dem vom Frequenzwandler ausgegebenen Testsignal enthaltene unnötige Frequenzkomponenten beseitigt, dabei bewirkend eine Ausgabe des Hochfrequenzsignals schließlich in Form des modulierenden Signals und als ein Testsignal zusammen mit Frequenzoffsets bei mehreren Schritten zu allen im Voraus bestimmten Intervallen durch Anwenden der im Voraus bestimmten Trägerfrequenz als eine Referenz.

5. Vorrichtung zum Erzeugen eines Testsignals für ein Kommunikationsgerät nach Anspruch 4, **dadurch gekennzeichnet, dass**,
wenn mindestens das Bandpassfilter als eine Komponente bereitgestellt wird, die eine ungleichmäßige Frequenzcharakteristik zur Testsignal-Ausgabeeinheit aufweist,
speichert der Sequenzspeicher im Voraus dritte Sequenzinformation, einschließlich Pegeloffsetwerten für das Festlegen der Pegeloffsetwerte von einem Signalpegel bei der im Voraus bestimmten Trägerfrequenz, die als die Referenz, um größer zu sein, dient, wenn ein Absolutwert von Offsetfrequenzen zum Bereitstellen von Frequenzoffsets bei mehreren Schritten zu allen im Voraus bestimmten Intervallen durch Anwenden einer im Voraus bestimmten Trägerfrequenz die dem Testsignal als Offsetfrequenz die in der zweiten Sequenzinformation bereitgestellt wird, größer wird, und

die Sequenzsteuereinheit die dritte Sequenzinformation aus dem Sequenzspeicher liest und, als Reaktion auf eine Zeitregelung, zu der die I-Wellenformdaten und die Q-Wellenformdaten von dem Paar von Wellenformspeichern ausgegeben werden, das Paar von Multiplizierern über die in der dritten Sequenzinformation enthaltenen Pegeloffsetwerte anweist, und dabei ein Festlegen der Pegeloffsetwerte von einem Signalpegel bei der im Voraus bestimmten Trägerfrequenz, die als die Referenz, um größer zu sein, dient, zu bewirken, einen Absolutwert von Offsetfrequenzen zum Bereitstellen von Frequenzoffsets bei mehreren Schritten zu allen im Voraus bestimmten Intervallen durch Anwenden einer im Voraus bestimmten Trägerfrequenz die dem Testsignal als Offsetfrequenz die in der zweiten Sequenzinformation bereitgestellt wird, größer wird.

6. Vorrichtung zum Erzeugen eines Testsignals für ein Kommunikationsgerät nach Anspruch 1, **dadurch gekennzeichnet, dass**

der Sequenzspeicher im Voraus vierte Sequenzinformation, einschließlich der Anzahl von Wiederholungen von Lesen von I-Wellenformdaten und Q-Wellenformdaten für alle der Einheitsdaten von dem Paar von Wellenformspeichern, um die Anzahl von Wiederholungen für alle der im Testsignal enthaltenen Einheitsdaten für endgültige Ausgabe, speichert, und

die Sequenzsteuereinheit die vierte Sequenzinformation aus dem Sequenzspeicher liest, und die Lesesteuereinheit, als Reaktion auf eine Zeitregelung, zu der die I-Wellenformdaten und die Q-Wellenformdaten von dem Paar von Wellenformspeichern ausgegeben werden, bezüglich der Anzahl von Wiederholungen von Lesen von I-Wellenformdaten und Q-Wellenformdaten für alle der in der vierten Sequenzinformation von dem Paar der Wellenformspeicher enthaltenen Einheitsdaten anweist, und dabei eine sequenzielle Ausgabe von dem Paar von Wellenformspeichern der Einheitsdaten kontinuierlich die Anzahl Male entsprechend der Anzahl von Wiederholungen von Lesen der I-Wellenformdaten und der Q-Wellenformdaten von dem Paar von Wellenformspeichern bewirkt.

7. Vorrichtung zum Erzeugen eines Testsignals für ein Kommunikationsgerät nach Anspruch 1, **dadurch gekennzeichnet, dass** die zweite Sequenzinformation, die im Sequenzspeicher zu speichernde Offsetfrequenzen enthält, festgelegt ist als Offsetfrequenzen, die es ermöglichen, Frequenzsprünge zu erreichen, wodurch eine Trägerfrequenz f eines Testsignals erreicht werden kann, die ein Signal für ein Global System for Mobile Communications (GSM) nachahmt, da das Testsignal für ein zeitabhängiges Variieren ausgeführt ist, wobei es möglich ist, einen Störwellenfestigkeitstest für eine zu testende Vorrichtung in einem Wideband Code Division Multiple Access-System (WCDMA-System) mithilfe des GSM-Signals auf solche Weise zu erzielen, dass sich das GSM-Signal diskret innerhalb eines Bereichs von empfangenen Frequenzen der zu testenden Vorrichtung im WCDMA-System bewegt.

8. Vorrichtung zum Erzeugen eines Testsignals für ein Kommunikationsgerät nach Anspruch 1, **dadurch gekennzeichnet, dass**

das Paar von Multiplizierern die von dem Paar von Wellenformspeichern ausgegebenen I-Wellenformdaten und Q-Wellenformdaten mit einem auf Basis der von der Sequenzsteuereinheit angewiesenen Signalpegel bestimmten Verstärkungsmultiplikationswert multipliziert, wodurch bewirkt wird, dass die Signalpegel der von dem Paar von Wellenformspeichern ausgegebenen I-Wellenformdaten und Q-Wellenformdaten, die in der ersten, im Sequenzspeicher gespeicherten Sequenzinformation enthalten sind, festgelegt werden.

9. Vorrichtung zum Erzeugen eines Testsignals für ein Kommunikationsgerät nach Anspruch 5, **dadurch gekennzeichnet, dass**

das Paar von Multiplizierern die von dem Paar von Wellenformspeichern ausgegebenen I-Wellenformdaten und Q-Wellenformdaten mit einem auf Basis der in der dritten Sequenzinformation enthaltenen Pegeloffsetwerte bestimmten Verstärkungsmultiplikationswert multipliziert, wobei die Pegeloffsetwerte von der Sequenzsteuereinheit angewiesen werden, wodurch bewirkt wird, dass die Signalpegel der von dem Paar von Wellenformspeichern an die Pegeloffsetwerte ausgelesenen I-Wellenformdaten und Q-Wellenformdaten, die in der der dritten, im Sequenzspeicher gespeicherten Sequenzinformation enthalten sind, im Sequenzspeicher festgelegt werden.

10. Vorrichtung zum Erzeugen eines Testsignals für ein Kommunikationsgerät nach Anspruch 1, **dadurch gekennzeichnet, dass** sie ferner Folgendes aufweist:

eine Testdatenbank, gebildet auf einer Festplatte, in der eine Wellenformdatenbank bereitgestellt ist, in der I-Wellenformdaten und Q-Wellenformdaten der im Testsignal enthaltenen Einheitsdaten gespeichert werden, und eine Sequenzdatenbank, in der verschiedene Sequenzinformation gespeichert ist; und

eine Datenschreibeinheit, die an die Testdatenbank angeschlossen ist, wobei

die in der Wellenformdatenbank gespeicherten I-Wellenform-Digitaldaten und Q-Wellenform-Digitaldaten und in der Sequenzdatenbank gespeicherte, verschiedene Sequenzinformation außerhalb aufbereitet und in die Testdatenbank heruntergeladen werden, und,

wenn I-Wellenform-Digitaldaten und Q-Wellenform-Digitaldaten entsprechend einem neu auszugebenden Testsignal über die Datenschreibeinheit aus der Wellenformdatenbank gelesen und in das Paar von Wellenformspeichern geschrieben werden und gleichzeitig Sequenzinformation entsprechend dem neu auszugebenden Testsignal aus der Sequenzdatenbank gelesen und in den Sequenzspeicher geschrieben werden.

11. Vorrichtung zum Erzeugen eines Testsignals für ein Kommunikationsgerät nach Anspruch 1, **dadurch gekennzeichnet, dass** sie ferner Folgendes aufweist:

einen numerischen Steueroszillator, der bewirkt, dass die Sequenzsteuereinheit als die in der zweiten Sequenzinformation enthaltenen Offsetfrequenzen, die aus dem Sequenzspeicher gelesen werden, Offsetfrequenzen ($\omega$') zum Bereitstellen von Frequenzoffsets bei mehreren Schritten zu jedem im Voraus bestimmten Intervall durch Anwenden der im Voraus bestimmten Trägerfrequenz beim Testsignal als Referenz spezifiziert, wobei der numerische Steueroszillator eine Sinuswelle sin$\omega$' (t) und eine Cosinuswelle cos$\omega$' (t) erzeugt, die den von der Sequenzsteuereinheit spezifizierten Offsetfrequenzen ($\omega$') entsprechen, und diese an die Frequenzoffseteinheit senden, und,

wenn Frequenzen $\omega$ (= 2nf) der I-Wellenformdaten und der Q-Wellenformdaten durch Offsetfrequenzen $\omega$' (= 2$\pi$f') versetzt im Sequenzspeicher gespeichert ist, führt die Frequenzoffseteinheit eine Frequenzoffsetverarbeitung auf solche Weise aus, dass, wenn die I-Wellenformdaten beziehungsweise die Q-Wellenformdaten mit:

$$\cos\omega(t), \; \sin\omega(t) \qquad\qquad ...(1),$$

bezeichnet werden, werden die Sinuswelle und Cosinuswelle jeweils umgewandelt in:

$$\cos\{\omega(t) + \omega'(t)\}, \; \sin\{\omega(t) + \omega'(t)\} \qquad ...(2).$$

12. Vorrichtung zum Erzeugen eines Testsignals für ein Kommunikationsgerät nach Anspruch 11, **dadurch gekennzeichnet, dass**,

wenn die Formel (2) durch Anwenden der Formel (1) ausgedrückt wird und die Offsetfrequenzen ($\omega$') mit:

$$
\begin{aligned}
&\cos\{\omega(t) + \omega'(t)\} \\
&= -\sin\omega(t) \cdot \sin\omega'(t) + \cos\omega(t) \cdot \cos\omega'(t), \\
&\sin\{\omega(t) + \omega'(t)\} \\
&= \cos\omega(t) \cdot \sin\omega'(t) + \sin\omega(t) \cdot \cos\omega'(t) \qquad ...(3),
\end{aligned}
$$

angesetzt wird, erreicht die Frequenzoffseteinheit die durch Formel (3) dargestellten Frequenzoffsets.

13. Vorrichtung zum Erzeugen eines Testsignals für ein Kommunikationsgerät nach Anspruch 12, **dadurch gekennzeichnet, dass**

zum Erzielen der durch die Formel (3) dargestellten Frequenzoffsets die Frequenzoffseteinheit Folgendes aufweist:

erste und zweite Multiplizierer, die die I-Wellenformdaten cos$\omega$(t) und die Q-Wellenformdaten sin$\omega$(t) jeweils mit einer ersten Frequenzoffsetkomponente cos$\omega$'(t) multiplizieren;

dritte und vierte Multiplizierer, die die I-Wellenformdaten cos$\omega$(t) und die Q-Wellenformdaten sin$\omega$(t) jeweils mit einer zweiten Frequenzoffsetkomponente sin$\omega$'(t) multiplizieren;

einen ersten Addierer, der den ersten Frequenzoffset cos$\{\omega(t) + \omega'(t)\}$ = -sin$\omega$(t)·sin$\omega$' (t) + cos$\omega$(t)·cos$\omega$' (t) durch Hinzufügen einer Ausgabe vom ersten Multiplizierer und einer Ausgabe vom vierten Multiplizierer ausgibt; und

einen zweiten Addierer, der den zweiten Frequenzoffset sin{ω(t) + ω'(t)} = cosω(t)·sinω'(t) + sinω(t)·cosω'(t) durch Hinzufügen einer Ausgabe vom zweiten Multiplizierer und einer Ausgabe vom dritten Multiplizierer ausgibt.

**14.** Verfahren zum Erzeugen eines Testsignals für ein Kommunikationsgerät, aufweisend:

einen Schritt zum jeweiligen Speichern im Voraus von Inphase-Komponenten-Wellenform-Digitaldaten, I-Wellenformdaten, und Quadratur-Komponenten-Wellenform-Digitaldaten, Q-Wellenformdaten, die einen Satz von digitalen Basisband-Quadratur-Signalen I und Q in mindestens einem oder mehreren Typen von Einheitsdaten konfigurieren, die als Quellen eines letztlich auszugebenden Testsignals dienen, jeweils im Voraus an im Voraus bestimmten Adressen eines Paares von Wellenformspeichern (2, 3) gespeichert werden;

einen Schritt zum Veranlassen eines Sequenzspeichers (4a) zum Speichern im Voraus von erster Sequenzinformation, umfassend eine Lesereihenfolge und Leseadressen der Einheitsdaten, die die I-Wellenformdaten und die Q-Wellenformdaten umfassen, die in dem Paar von Wellenformspeichern gespeichert sind, und die gewünschten Signalpegel, die in den Einheitsdaten einschließlich der vom Paar von Wellenformspeichern gelesenen I-Wellenformdaten und die Q-Wellenformdaten festzulegen sind; und zweite Sequenzinformation, einschließlich der Offsetfrequenzen, die für das Bereitstellen von Frequenzoffsets bei mehreren Schritten zu allen im Voraus bestimmten Intervallen durch Anwenden einer im Voraus bestimmten Trägerfrequenz auf das Testsignal die dem Testsignal als eine Referenz in Bezug auf die von dem Paar von Wellenformspeichern gelesenen in den I-Wellenformdaten und in den Q-Wellenformdaten enthaltenen Einheitsdaten bereitgestellt wird;

einen Schritt zum Veranlassen einer Sequenzsteuereinheit (6a) zum Lesen der ersten Sequenzinformation vom Sequenzspeicher und zum Anweisen einer Lesesteuereinheit über die Lesereihenfolge und die in der ersten Sequenzinformation enthaltenen Leseadressen und zum sequenziellen Ausgeben der I-Wellenformdaten und der Q-Wellenformdaten von dem Paar von Wellenformspeichern;

einen Schritt zum Veranlassen der Sequenzsteuereinheit zum Lesen der ersten Sequenzinformation vom Sequenzspeicher und zum Anweisen eines Paares von Multiplizierern (9, 10) über die in der ersten Sequenzinformation enthaltenen gewünschten Signalpegel als Reaktion auf eine Zeitregelung, zu der die I-Wellenformdaten und die Q-Wellenformdaten von dem Paar von Wellenformspeichern ausgegeben werden und dabei ein Festlegen der Signalpegel der jeweils sequenziell von dem Paar von Wellenformspeichern an die gewünschten Signalpegel ausgegebenen I-Wellenformdaten und der Q-Wellenformdaten bewirken;

einen Schritt zum Veranlassen eines Paares von Digital-Analog-Wandlern (19, 20) zum Umwandeln der I-Wellenformdaten und der Q-Wellenformdaten, die sequenziell von dem Paar von Multiplizierern jeweils in ein analoges I-Wellenformsignal und ein analoges Q-Wellenformsignal ausgegeben werden;

einen Schritt, in einer digitalen, Stufe vom Paar der Wellenformspeicher bis zum Paar der Digital-Analog-Wandler, zum Veranlassen der Sequenzsteuereinheit zum Lesen der zweiten Sequenzinformation vom Sequenzspeicher und zum Anweisen einer Frequenzoffseteinheit (34) über die in der zweiten Sequenzinformation enthaltenen Offsetfrequenzen zum Festlegen der Offsetfrequenzen zum Bereitstellen von Frequenzoffsets bei mehreren Schritten zu allen im Voraus bestimmten Intervallen durch Anwenden der im Voraus bestimmten Trägerfrequenz auf das Testsignal als eine Referenz in Bezug auf die Einheitsdaten einschließlich der I-Wellenformdaten und die Q-Wellenformdaten; und

einen Schritt zum Veranlassen einer Testsignalausgabeeinheit (100) zum Umwandeln des I-Wellenform-Analogsignals und des Q-Wellenform-Analogsignals, die sequenziell von dem Paar von Digital-Analog-Wandlern ausgegeben werden, in ein Hochfrequenzsignal durch Anwenden eines Trägerfrequenzsignals nach Ausführen einer Quadraturmodulation an den Signalen, zur Ausgabe schließlich in Form des modulierenden Signals und als ein Testsignal zusammen mit Frequenzoffsets bei mehreren Schritten zu allen im Voraus bestimmten Intervallen durch Anwenden der im Voraus bestimmten Trägerfrequenz als Referenz.

**15.** Verfahren zum Erzeugen eines Testsignals für ein Kommunikationsgerät nach Anspruch 14, **dadurch gekennzeichnet, dass**

der Schritt zum Festlegen der Frequenzoffsets in einer zwischen dem Paar von Wellenformspeichern und dem Paar von Multiplizierern Frequenzoffseteinheit bereitgestellten ausgeführt wird.

**16.** Verfahren zum Erzeugen eines Testsignals für ein Kommunikationsgerät nach Anspruch 14, **dadurch gekennzeichnet, dass**

der Schritt zum Festlegen der Offsetfrequenzinformation in einer zwischen dem Paar von Multiplizierern und dem Paar von Digital-Analog-Wandlern bereitgestellten Frequenzoffseteinheit ausgeführt wird.

**17.** Verfahren zum Erzeugen eines Testsignals für ein Kommunikationsgerät nach Anspruch 14, **dadurch gekenn-**

**zeichnet, dass**

der Schritt zur Ausgabe des I-Wellenform-Analogsignals und des Q-Wellenform-Analogsignals in Form des modulierenden Signals und als ein Testsignal zusammen mit Frequenzoffsets bei mehreren Schritten zu allen im Voraus bestimmten Intervallen durch Anwenden der im Voraus bestimmten Frequenz als Referenz Folgendes aufweist:

einen Schritt zum Veranlassen eines Quadraturmodulators zur Ausgabe des I-Wellenform-Analogsignals und des Q-Wellenform-Analogsignals, die sequenziell von dem Paar von Digital-Analog-Wandlern ausgegeben werden, durch Anwenden eines lokalen Oszillatorsignals von einem lokalen Oszillator als ein quadraturmoduliertes modulierendes Signal;

einen Schritt zum Veranlassen eines Frequenzwandlers zum Umwandeln des vom Quadraturmodulator ausgegebenen modulierenden Signals durch Anwenden eines Trägerfrequenzsignals von einem Oszillator in ein Hochfrequenzsignal für Ausgabe in Form des modulierenden Signals und als Testsignal zusammen mit einer im Voraus bestimmten Trägerfrequenz; und

einen Schritt zum Veranlassen eines Bandpassfilters zum Beseitigen von in dem vom Frequenzwandler ausgegebenen Testsignal enthaltenen unnötigen Frequenzkomponenten, um schließlich in Form des modulierenden Signals und als ein Testsignal zusammen mit Frequenzoffsets bei mehreren Schritten zu allen im Voraus bestimmten Intervallen durch Anwenden der im Voraus bestimmten Trägerfrequenz als eine Referenz ausgegeben zu werden.

**18.** Verfahren zum Erzeugen eines Testsignals für ein Kommunikationsgerät nach Anspruch 17, **dadurch gekennzeichnet, dass** es ferner Folgendes aufweist:

wenn mindestens das Bandpassfilter als eine Komponente bereitgestellt wird, die eine ungleichmäßige Frequenzcharakteristik zur Testsignal-Ausgabeeinheit aufweist,

einen Schritt zum Veranlassen des Sequenzspeichers zum Speichern im Voraus von dritter Sequenzinformation, die Pegeloffsetwerte für das Festlegen von Pegeloffsetwerten von einem Signalpegel bei der im Voraus bestimmten Trägerfrequenz enthält, als die Referenz, um größer zu sein, wenn ein Absolutwert von Offsetfrequenzen zum Bereitstellen von Frequenzoffsets bei mehreren Schritten zu allen im Voraus bestimmten Intervallen durch Anwenden einer im Voraus bestimmten Trägerfrequenz die dem Testsignal als Offsetfrequenzen, die in der zweiten Sequenzinformation bereitgestellt werden, größer wird; und

einen Schritt zum Veranlassen der Sequenzsteuereinheit zum Lesen der dritten Sequenzinformation aus dem Sequenzspeicher und zum Anweisen des Paares von Multiplizierern über die in der dritten Sequenzinformation enthaltenen Pegeloffsetwerte als Reaktion auf eine Zeitregelung zu der die I-Wellenformdaten und die Q-Wellenformdaten von dem Paar von Wellenformspeichern ausgegeben werden, und dabei ein Festlegen der Pegeloffsetwerte von einem Signalpegel bei der im Voraus bestimmten Trägerfrequenz, die als die Referenz, um größer zu sein, dient, wenn ein größerer Absolutwert von Offsetfrequenzen zum Bereitstellen von Frequenzoffsets bei mehreren Schritten zu allen im Voraus bestimmten Intervallen durch Anwenden einer im Voraus bestimmten Trägerfrequenz die dem Testsignal als Offsetfrequenzen, die in der zweiten Sequenzinformation bereitgestellt wird, größer wird.

**19.** Verfahren zum Erzeugen eines Testsignals für ein Kommunikationsgerät nach Anspruch 14, **dadurch gekennzeichnet, dass** es ferner Folgendes aufweist:

einen Schritt zum Veranlassen des Sequenzspeichers, im Voraus vierte Sequenzinformation, einschließlich der Anzahl von Wiederholungen von Lesen von I-Wellenformdaten und Q-Wellenformdaten für alle der Einheitsdaten von dem Paar von Wellenformspeichern zu speichern, um die Anzahl von Wiederholungen für alle der im Testsignal enthaltenen Einheitsdaten für endgültige Ausgabe festzulegen; und

einen Schritt zum Veranlassen der Sequenzsteuereinheit, die vierte Sequenzinformation aus dem Sequenzspeicher zu lesen, und zum Anweisen der Lesesteuereinheit bezüglich der Anzahl von Wiederholungen von Lesen von I-Wellenformdaten und Q-Wellenformdaten für alle der Einheitsdaten in der vierten Sequenzinformation von dem Paar von Wellenformspeichern enthaltenen, als Reaktion auf eine Zeitregelung, zu der die I-Wellenformdaten und die Q-Wellenformdaten von dem Paar von Wellenformspeichern ausgegeben werden, und dabei sequenziell von dem Paar von Wellenformspeichern kontinuierlich eine Ausgabe der Einheitsdaten die Anzahl Male entsprechend der Anzahl von Wiederholungen von Lesen der I-Wellenformdaten und der Q-Wellenformdaten für alle der Einheitsdaten auszugeben.

**20.** Verfahren zum Erzeugen eines Testsignals für ein Kommunikationsgerät nach Anspruch 14, **dadurch gekennzeichnet, dass**

im Schritt zum Veranlassen des Sequenzspeichers zum Speichern im Voraus der zweiten Sequenzinformation einschließlich der Offsetfrequenzen,

wobei die zweite Sequenzinformation einschließlich der im Sequenzspeicher zu speichernden Offsetfrequenzen als Offsetfrequenzen festgelegt ist, die es ermöglichen, Frequenzsprünge zu erreichen, wodurch eine Trägerfrequenz eines Testsignals erreicht werden kann, die ein Signal für ein Global System for Mobile Communications (GSM) nachahmt, da das Testsignal für ein zeitabhängiges Variieren ausgeführt ist, wobei es möglich ist, einen Störwellenfestigkeitstest für eine zu testende Vorrichtung in einem Wideband Code Division Multiple Access-System (WCDMA-System) mithilfe des GSM-Signals auf solche Weise zu erzielen, dass sich das GSM-Signal diskret innerhalb eines Bereichs von empfangenen Frequenzen der zu testenden Vorrichtung im WCDMA-System bewegt.

21. Verfahren zum Erzeugen eines Testsignals für ein Kommunikationsgerät nach Anspruch 14, **dadurch gekennzeichnet, dass**

im Schritt zum Festlegen der Signalpegel der I-Wellenformdaten und der Q-Wellenformdaten, die jeweils von dem Paar von Wellenformspeichern an die gewünschten Signalpegel ausgegeben werden,

das Paar von Multiplizierern zum Multiplizieren der von dem Paar von Wellenformspeichern ausgegebenen I-Wellenformdaten und Q-Wellenformdaten mit einem auf Basis der von der Sequenzsteuereinheit angewiesenen Signalpegel bestimmten Verstärkungsmultiplikationswert benutzt wird, wobei die Signalpegel der von dem Paar von Wellenformspeichern gelesenen I-Wellenformdaten und Q-Wellenformdaten auf die in der ersten, im Sequenzspeicher gespeicherte Sequenzinformation festgelegt werden.

22. Verfahren zum Erzeugen eines Testsignals für ein Kommunikationsgerät nach Anspruch 18, **dadurch gekennzeichnet, dass**

im Schritt zum Festlegen der Signalpegel der I-Wellenformdaten und der Q-Wellenformdaten, die jeweils sequenziell von dem Paar von Wellenformspeichern an die gewünschten Signalpegel ausgegeben werden,

das Paar von Multiplizierern zum Multiplizieren der von dem Paar von Wellenformspeichern ausgegebenen I-Wellenformdaten und Q-Wellenformdaten mit einem Verstärkungsmultiplikationswert benutzt wird, der auf den in der dritten Sequenzinformation enthaltenen Pegeloffsetwerten basiert, die von der Sequenzsteuereinheit angewiesen sind, wobei Signalpegel der I-Wellenformdaten und Q-Wellenformdaten auf, die in der dritten, im Sequenzspeicher gespeicherten Sequenzinformation enthalten sind.

23. Verfahren zum Erzeugen eines Testsignals für ein Kommunikationsgerät nach Anspruch 14, **dadurch gekennzeichnet, dass** es ferner Folgendes aufweist:

einen Schritt zum Aufbereiten: einer Testdatenbank, gebildet auf einer Festplatte, in der eine Wellenformdatenbank bereitgestellt ist, in der die I-Wellenformdaten und die Q-Wellenformdaten der im Testsignal enthaltenen Einheitsdaten gespeichert werden, und eine Sequenzdatenbank, in der verschiedene Sequenzinformation gespeichert ist; und eine Datenschreibeinheit, die an die Testdatenbank angeschlossen ist;

einen Schritt zum Herunterladen in die Testdatenbank der außerhalb aufbereiteten I-Wellenformdaten und die Q-Wellenformdaten, zum Speichern in der Wellenformdatenbank, und in der Sequenzdatenbank gespeicherter, verschiedener Sequenzinformation; und

einen Schritt zum Veranlassen der Datenschreibeinheit zum Lesen der I-Wellenformdaten und Q-Wellenformdaten von der Wellenformdatenbank entsprechend einem neu auszugebenden, in das Paar von Wellenformspeichern zu schreibenden Testsignal, und Lesen von Sequenzinformation entsprechend dem von der Sequenzdatenbank neu auszugebenden Testsignal, das in den Sequenzspeicher zu schreiben ist.

24. Verfahren zum Erzeugen eines Testsignals für ein Kommunikationsgerät nach Anspruch 14, **dadurch gekennzeichnet, dass**

der Schritt zum Einstellen der Offsetfrequenzen Folgendes ausweist:

einen Schritt zum Veranlassen eines numerischen Steueroszillators zum Spezifizieren von Offsetfrequenzen ($\omega'$) zum Bereitstellen von Frequenzoffsets bei mehreren Schritten zu jedem im Voraus bestimmten Intervall durch Anwenden der im Voraus bestimmten Trägerfrequenz beim Testsignal als Referenz, da die in der zweiten Sequenzinformation enthaltenen Offsetfrequenzen aus dem Sequenzspeicher gelesen werden;

einen Schritt zum Veranlassen des numerischen Steueroszillators zum Erzeugen einer Sinuswelle $\sin\omega'$ (t) und einer Cosinuswelle $\cos\omega'$ (t), die den von der Sequenzsteuereinheit spezifizierten Offsetfrequenzen ($\omega'$) entsprechen, die an die Frequenzoffseteinheit zu senden sind; und,

einen Schritt, wenn Frequenzen $\omega$ (= 2nf) der I-Wellenformdaten und der Q-Wellenformdaten durch Offsetfrequenzen $\omega'$ (= $2\pi f'$) versetzt im Sequenzspeicher gespeichert sind, zum Veranlassen der Frequenzoffseteinheit zum Ausführen einer Frequenzoffsetverarbeitung auf solche Weise, dass, wenn die I-Wellenformdaten beziehungsweise die Q-Wellenformdaten mit:

$$\cos\omega(t), \sin\omega(t) \qquad\qquad \ldots(1),$$

bezeichnet werden, die Sinuswelle und Cosinuswelle jeweils umgewandelt werden in:

$$\cos\{\omega(t) + \omega'(t)\}, \sin\{\omega(t) + \omega'(t)\} \qquad \ldots(2).$$

**25.** Verfahren zum Erzeugen eines Testsignals für ein Kommunikationsgerät nach Anspruch 24, **dadurch gekennzeichnet, dass**
der Schritt zum Veranlassen der Frequenzoffseteinheit zum Ausführen von Frequenzoffsetverarbeitung die in der Formel (3) dargestellten Frequenzoffsets erreicht, wenn die Formel (2) durch Anwenden der Formel (1) ausgedrückt wird und die Offsetfrequenzen (ω') mit:

$$\cos\{\omega(t) + \omega'(t)\}$$
$$= -\sin\omega(t)\cdot\sin\omega'(t) + \cos\omega(t)\cdot\cos\omega'(t),$$
$$\sin\{\omega(t) + \omega'(t)\}$$
$$= \cos\omega(t)\cdot\sin\omega'(t) + \sin\omega(t)\cdot\cos\omega'(t) \qquad \ldots(3)$$

angesetzt werden.

**26.** Verfahren zum Erzeugen eines Testsignals für ein Kommunikationsgerät nach Anspruch 25, **dadurch gekennzeichnet, dass**
zum Erzielen der durch die Formel (3) dargestellten Frequenzoffsets der Schritt zum Veranlassen der Frequenzoffseteinheit zur Frequenzoffsetverarbeitung Folgendes aufweist:

einen Schritt zum Veranlassen der ersten und zweiten Multiplizierer zum Multiplizieren der I-Wellenformdaten $\cos\omega(t)$ und der Q-Wellenformdaten $\sin\omega(t)$ jeweils mit einer ersten Frequenzoffsetkomponente $\cos\omega'(t)$;
einen Schritt zum Veranlassen der dritten und vierten Multiplizierer zum Multiplizieren der I-Wellenformdaten $\cos\omega(t)$ und der Q-Wellenformdaten $\sin\omega(t)$ jeweils mit einer zweiten Frequenzoffsetkomponente $\sin\omega'(t)$;
einen Schritt zum Veranlassen eines ersten Addierers zum Hinzufügen einer Ausgabe vom ersten Multiplizierer und einer Ausgabe vom vierten Multiplizierer, wobei der erste Frequenzoffset $\cos\{\omega(t) + \omega'(t)\} = -\sin\omega(t)\cdot\sin\omega'(t) + \cos\omega(t)\cdot\cos\omega'(t)$ ausgegeben werden; und
einen Schritt zum Veranlassen eines zweiten Addierers zum Hinzufügen einer Ausgabe vom zweiten Multiplizierer und einer Ausgabe vom dritten Multiplizierer, wobei der zweite Frequenzoffset $\sin\{\omega(t) + \omega'(t)\} = \cos\omega(t)\cdot\sin\omega'(t) + \sin\omega(t)\cdot\cos\omega'(t)$ ausgegeben wird.

**Revendications**

**1.** Appareil de génération de signal d'essai pour un équipement de communication, comprenant :

une paire de mémoires de forme d'onde (2, 3) dans lesquelles des données numériques de forme d'onde à composante en phase, des données de forme d'onde I, et des données numériques de forme d'onde à composante en quadrature, des données de forme d'onde Q, qui configurent un ensemble de signaux en quadrature de bande de base numériques I et Q dans au moins un ou plusieurs type(s) de données unitaires servant de sources d'un signal d'essai à délivrer en sortie finalement, sont respectivement stockées à l'avance à des adresses prédéterminées ;
une unité de commande de lecture (7) pour délivrer en sortie de manière séquentielle les données de forme d'onde I et les données de forme d'onde Q à partir de la paire de mémoires de forme d'onde ;

une paire de multiplicateurs (9, 10) pour définir des niveaux de signaux des données de forme d'onde I et des données de forme d'onde Q qui sont délivrées en sortie de manière séquentielle à partir de la paire de mémoires de formes d'onde à des niveaux de signaux souhaités par l'unité de commande de lecture, respectivement ;

une paire de convertisseurs numériques-analogiques (19, 20) qui convertissent les données de forme d'onde I et les données de forme d'onde Q qui sont délivrées en sortie de manière séquentielle à partir de la paire de multiplicateurs en un signal analogique de forme d'onde I et un signal analogique de forme d'onde Q, respectivement ;

une unité de décalage de fréquence (34) qui définit des fréquences de décalage pour fournir des décalages de fréquence à une pluralité d'étapes à chaque intervalle prédéterminé en utilisant une fréquence porteuse prédéterminée fournie au signal d'essai en tant que référence, par rapport aux données de forme d'onde I et aux données de forme d'onde Q entre la paire de mémoires de forme d'onde et la paire de convertisseurs numériques-analogiques ;

une mémoire de séquence (4a) qui stocke à l'avance : des premières informations de séquence comportant un ordre de lecture et des adresses de lecture des données unitaires comportant les données de forme d'onde I et les données de forme d'onde Q stockées dans la paire de mémoires de forme d'onde, et les niveaux de signaux souhaités à définir dans les données unitaires, comportant les données de forme d'onde I et les données de forme d'onde Q lues à partir de la paire de mémoires de forme d'onde ; et des deuxièmes informations de séquence, comportant les fréquences de décalage définies pour fournir des décalages de fréquence à une pluralité d'étapes à chaque intervalle prédéterminé en utilisant la fréquence porteuse prédéterminée fournie au signal d'essai en tant que référence, par rapport aux données unitaires comportant les données de forme d'onde I et les données de forme d'onde Q lues à partir de la paire de mémoires de forme d'onde ;

une unité de commande de séquence (6a) qui lit les premières informations de séquence à partir de la mémoire de séquence, donne une instruction à l'unité de commande de lecture concernant l'ordre de lecture et les adresses de lecture inclus dans les premières informations de séquence provoquant ainsi la sortie séquentielle des données de forme d'onde I et des données de forme d'onde Q à partir de la paire de mémoires de forme d'onde ; et donne une instruction à la paire de multiplicateurs concernant les niveaux de signaux souhaités inclus dans les premières informations de séquence en réponse à un moment auquel les données de forme d'onde I et les données de forme d'onde Q sont délivrées en sortie à partir de la paire de mémoires de forme d'onde provoquant ainsi la définition des niveaux de signaux des données de forme d'onde I et des données de forme d'onde Q qui sont délivrées en sortie de manière séquentielle à partir de la paire de mémoires de forme d'onde, respectivement, aux niveaux de signaux souhaités ; et lit en outre les deuxièmes informations de séquence à partir de la mémoire de séquence, et donne une instruction à l'unité de décalage de fréquence des fréquences de décalage incluses dans les deuxièmes informations de séquence provoquant ainsi la définition des fréquences de décalage pour fournir des décalages de fréquence à une pluralité d'étapes à chaque intervalle prédéterminé en utilisant la fréquence porteuse prédéterminée fournie au signal d'essai en tant que référence, par rapport aux données unitaires comportant les données de forme d'onde I et les données de forme d'onde Q ; et

une unité de sortie de signal d'essai (100) qui convertit le signal analogique de forme d'onde I et le signal de données de forme d'onde Q qui sont délivrés en sortie de manière séquentielle à partir de la paire de convertisseurs numériques-analogiques en un signal haute fréquence en utilisant un signal de fréquence porteuse après l'application de la modulation en quadrature aux signaux, provoquant ainsi la sortie du signal haute fréquence finalement sous la forme du signal de modulation et en tant que signal d'essai conjointement avec des décalages de fréquence à une pluralité d'étapes à chaque intervalle prédéterminé en utilisant la fréquence prédéterminée en tant que référence.

2. Appareil de génération de signal d'essai pour un équipement de communication selon la revendication 1, **caractérisé en ce que**
l'unité de décalage de fréquence est fournie entre la paire de mémoires de forme d'onde et la paire de multiplicateurs.

3. Appareil de génération de signal d'essai pour un équipement de communication selon la revendication 1, **caractérisé en ce que**
l'unité de décalage de fréquence est fournie entre la paire de multiplicateurs et la paire de convertisseurs numériques-analogiques.

4. Appareil de génération de signal d'essai pour un équipement de communication selon la revendication 1, **caractérisé en ce que**
l'unité de sortie de signal d'essai comprend :

un modulateur en quadrature qui module en quadrature le signal analogique de forme d'onde I et le signal analogique de forme d'onde Q qui sont délivrés en sortie de manière séquentielle à partir de la paire de convertisseurs numériques-analogiques en utilisant un signal d'oscillation locale provenant d'un oscillateur local, pour être délivré en sortie en tant que signal de modulation ;

un convertisseur de fréquence qui convertit le signal de modulation délivré en sortie à partir du modulateur en quadrature en un signal haute fréquence en utilisant un signal de fréquence porteuse provenant d'un oscillateur, pour être délivré en sortie sous la forme du signal de modulation et en tant que signal d'essai conjointement avec une fréquence porteuse prédéterminée ; et

un filtre passe-bande qui élimine des composantes de fréquence inutiles incluses dans le signal d'essai délivré en sortie à partir du convertisseur de fréquence, provoquant ainsi la sortie du signal d'essai finalement sous la forme du signal de modulation et en tant que signal d'essai conjointement avec des fréquences de décalage à une pluralité d'étapes à chaque intervalle prédéterminé en utilisant la fréquence porteuse prédéterminée en tant que référence.

5. Appareil de génération de signal d'essai pour un équipement de communication selon la revendication 4, **caractérisé en ce que**

lorsqu'au moins le filtre passe-bande est fourni en tant que composant ayant une caractéristique de fréquence irrégulière à l'unité de sortie de signal d'essai,

les mémoires de séquence stocke à l'avance des troisièmes informations de séquence comportant des valeurs de décalage de niveau pour définir des valeurs de décalage de niveau à partir d'un niveau de signal à la fréquence porteuse prédéterminée servant de référence de manière à être plus grandes, à mesure qu'une valeur absolue de fréquences de décalage devient plus grande pour fournir des décalages de fréquence à une pluralité d'étapes à chaque intervalle prédéterminé en utilisant en tant que référence la fréquence porteuse prédéterminée fournie au signal d'essai comme étant les fréquences de décalage incluses dans les deuxième informations de séquence, et

l'unité de commande de séquence lit les troisièmes informations de séquence à partir de la mémoire de séquence, et donne une instruction à la paire de multiplicateurs concernant les valeurs de décalage de niveau incluses dans les troisièmes informations de séquence en réponse à un moment auquel les données de forme d'onde I et les données de forme d'onde Q sont délivrées en sortie à partir de la paire de mémoires de forme d'onde, provoquant ainsi la définition des valeurs de décalage de niveau à partir d'un niveau de signal à la fréquence porteuse prédéterminée servant de référence de manière à être plus grandes, à mesure qu'une valeur absolue de fréquences de décalage devient plus grande pour fournir des décalages de fréquence à une pluralité d'étapes à chaque intervalle prédéterminé en utilisant en tant que référence la fréquence porteuse prédéterminée fournie au signal d'essai comme étant les informations de fréquence de décalage incluses dans les deuxièmes informations de séquence.

6. Appareil de génération de signal d'essai pour un équipement de communication selon la revendication 1, **caractérisé en ce que**

la mémoire de séquence stocke à l'avance des quatrièmes informations de séquence, comportant le nombre de répétitions de la lecture de données de forme d'onde I et de données de forme d'onde Q pour chacune des données unitaires à partir de la paire de mémoires de forme d'onde afin de définir le nombre de répétitions, pour chacune des données unitaires incluses dans le signal d'essai à délivrer en sortie finalement, et

l'unité de commande de séquence lit les quatrièmes informations de séquence à partir de la mémoire de séquence, et donne une instruction à l'unité de commande de lecture concernant le nombre de répétitions de la lecture de données de forme d'onde I et de données de forme d'onde Q pour chacune des données unitaires incluses dans les quatrièmes informations de séquence à partir de la paire de mémoires de forme d'onde en réponse à un moment auquel les données de forme d'onde I et les données de forme d'onde Q sont délivrées en sortie à partir de la paire de mémoires de forme d'onde, provoquant ainsi la sortie séquentielle à partir de la paire de mémoires de forme d'onde des données unitaires en continu le nombre de fois correspondant au nombre de répétitions de la lecture, des données de forme d'onde I et des données de forme d'onde Q pour chacune des données unitaires à partir de la paire de mémoires de forme d'onde.

7. Appareil de génération de signal d'essai pour un équipement de communication selon la revendication 1, **caractérisé en ce que** les deuxièmes informations de séquence comportant des fréquences de décalage à stocker dans la mémoire de séquence sont définies en tant que fréquences de décalage qui permettent de réaliser un saut de fréquence qui permet l'obtention d'une fréquence porteuse f d'un signal d'essai imitant un signal d'un Système Global de Communication Mobile (GSM) à mesure que le signal d'essai est amené à varier en fonction du temps, moyennant quoi il est possible de réaliser un essai de résistance d'onde d'interférence pour un dispositif devant être testé dans un système d'accès multiple par répartition en code à large bande (WCDMA) au moyen du signal GSM de manière à ce que le signal GSM se déplace de manière discrète dans une plage de fréquences reçues du dispositif devant être testé dans le système WCDMA.

8.  Appareil de génération de signal d'essai pour un équipement de communication selon la revendication 1, **caractérisé en ce que**

la paire de multiplicateurs multiplient les données de forme d'onde I et les données de forme d'onde Q délivrées en sortie à partir de la paire de mémoires de forme d'onde par une valeur de multiplication de gain déterminée sur la base des niveaux de signaux donnés comme instruction par l'unité de commande de séquence, provoquant ainsi la définition des niveaux de signaux des données de forme d'onde I et des données de forme d'onde Q délivrées en sortie à partir de la paire de mémoires de forme d'onde aux niveaux de signaux inclus dans les premières informations de séquence qui sont stockées dans la mémoire de séquence.

9.  Appareil de génération de signal d'essai pour un équipement de communication selon la revendication 5, **caractérisé en ce que**

la paire de multiplicateurs multiplient les données de forme d'onde I et les données de forme d'onde Q délivrées en sortie à partir de la paire de mémoires de forme d'onde par une valeur de multiplication de gain déterminée sur la base des valeurs de décalage de niveau incluses dans les troisièmes informations de séquence, les valeurs de décalage de niveau étant données comme instruction par l'unité de commande de séquence, provoquant ainsi la définition des niveaux de signaux des données de forme d'onde I et des données de forme d'onde Q lues à partir de la paire de mémoires de forme d'onde aux valeurs de décalage de niveau incluses dans les troisièmes informations de séquence qui sont stockées dans la mémoire de séquence.

10.  Appareil de génération de signal d'essai pour un équipement de communication selon la revendication 1, **caractérisé en ce qu'**il comprend en outre :

une base de données d'essai formée dans un lecteur de disque dur dans lequel une base de données de forme d'onde qui stocke des données de forme d'onde I et des données de forme d'onde Q des données unitaires incluses dans le signal d'essai et une base de données de séquence qui stocke différentes informations de séquence sont fournies ; et
une unité d'écriture de données reliée à la base de données d'essai, où
les données numériques de forme d'onde I et les données numériques de forme d'onde Q stockées dans la base de données de forme d'onde, et les différentes informations de séquence stockées dans la base de données de séquence sont préparées à l'extérieur, et téléchargées dans la base de données d'essai, et
lorsque les données numériques de forme d'onde I et les données numériques de forme d'onde Q correspondant à un signal d'essai devant être nouvellement délivrées en sortie sont lues à partir de la base de données de forme d'onde via l'unité d'écriture de données et écrites dans la paire de mémoires de forme d'onde, et en même temps, des informations de séquence correspondant au signal d'essai devant être nouvellement délivrées en sortie sont lues à partir de la base de données de séquence et écrites dans la mémoire de séquence.

11.  Appareil de génération de signal d'essai pour un équipement de communication selon la revendication 1, **caractérisé en ce qu'**il comprend en outre :

un oscillateur à commande numérique qui amène l'unité de commande de séquence à spécifier, comme étant les fréquences de décalage incluses dans les deuxièmes informations de séquence lues à partir de la mémoire de séquence, des fréquences de décalage ($\omega'$) pour fournir des décalages de fréquence à une pluralité d'étapes à chaque intervalle prédéterminé en utilisant le fréquence porteuse prédéterminée fournie au signal d'essai en tant que référence, où
l'oscillateur à commande numérique génère une onde sinusoïdale $\sin\omega'(t)$ et une onde cosinusoïdale $\cos\omega'(t)$ qui correspondent aux fréquences de décalage ($\omega'$) spécifiées par l'unité de commande de séquence, et transmet celles-ci à l'unité de décalage de fréquence, et
lorsque des fréquences $\omega$ (= $2\pi f$) des données de forme d'onde I et des données de forme d'ondes Q sont décalées par des fréquences de décalage $\omega'$ (= $2\pi f'$) stockées dans la mémoire de séquence, l'unité de décalage de fréquence effectue un traitement de décalage de fréquence de manière à ce que, lorsque les données de forme d'onde I et les données de forme d'onde Q sont respectivement désignées par :

$$\cos\omega\,(t),\ \sin\omega\,(t)\ \ldots\ (1),$$

l'onde sinusoïdale et l'onde cosinusoïdale soient converties respectivement en :

$$\cos\ \{\omega(t)\ +\ \omega'(t)\},\ \sin\ \{\omega(t)\ +\ \omega'(t)\}\ \dots\ (2).$$

**12.** Appareil de génération de signal d'essai pour un équipement de communication selon la revendication 11, **caractérisé en ce que**
lorsque la formule (2) est exprimée en utilisant la formule (1) et les fréquences de décalage (ω') pour être :

$$\cos\{\omega(t)\ +\ \omega'(t)\}$$
$$=\ -\sin\omega(t)\cdot\sin\omega'(t)\ +\ \cos\omega(t)\cdot\cos\omega'(t),$$
$$\sin\ \{\omega(t)\ +\ \omega'(t)\}$$
$$=\ \cos\omega(t)\cdot\sin\omega'(t)\ +\ \sin\omega(t)\cdot\cos\omega'(t)\ \dots\ (3),$$

l'unité de décalage de fréquence obtient des décalages de fréquence représentés par la formule (3).

**13.** Appareil de génération de signal d'essai pour un équipement de communication selon la revendication 12, **caractérisé en ce que**
afin d'obtenir les décalages de fréquence représentés par la formule (3), l'unité de décalage de fréquence comprend :

des premier et deuxième multiplicateurs qui multiplient les données de forme d'onde I $\cos\omega(t)$ et les données de forme d'onde Q $\sin\omega(t)$ respectivement par une première composante de décalage de fréquence $\cos\omega'(t)$ ;
des troisième et quatrième multiplicateurs qui multiplient les données de forme d'onde I $\cos\omega(t)$ et les données de forme d'onde Q $\sin\omega(t)$ respectivement par une deuxième composante de décalage de fréquence $\sin\omega'(t)$ ;
un premier additionneur qui délivre en sortie le premier décalage de fréquence $\cos\{\omega(t) + \omega'(t)\} = \sin\omega(t)\cdot\sin\omega'(t) + \cos\omega(t)\cdot\cos\omega'(t)$, en additionnant une sortie provenant du premier multiplicateur et une sortie provenant du quatrième multiplicateur ; et
un deuxième additionneur qui délivre en sortie le deuxième décalage de fréquence $\sin\{\omega(t) + \omega'(t)\} = \cos(t)\cdot\sin\omega'(t) + \sin\omega(t)\cdot\cos\omega'(t)$ en additionnant une sortie provenant du deuxième multiplicateur et une sortie provenant du troisième multiplicateur.

**14.** Procédé de génération de signal d'essai pour un équipement de communication, comprenant :

une étape qui consiste à stocker respectivement à l'avance des données numériques de forme d'onde à composante en phase, des données de forme d'onde I et des données numériques de forme d'onde à composante en quadrature, des données de forme d'onde Q, qui configurent un ensemble de signaux en quadrature de bande de base numériques I et Q dans au moins un ou plusieurs type(s) de données unitaires servant de sources d'un signal d'essai à délivrer en sortie finalement, à des adresses prédéterminées d'une paire de mémoires de forme d'onde (2, 3) ;
une étape qui consiste à amener une mémoire de séquence (4a) à stocker à l'avance des premières informations de séquence comportant un ordre de lecture et des adresses de lecture des données unitaires comportant les données de forme d'onde I et les données de forme d'onde Q stockées dans la paire de mémoires de forme d'onde, et les niveaux de signaux souhaités à définir dans les données unitaires comportant les données de forme d'onde I et les données de forme d'onde Q lues à partir de la paire de mémoires de forme d'onde et des deuxièmes informations de séquence comportant les fréquences de décalage qui sont définies pour fournir des décalages de fréquence à une pluralité d'étapes à chaque intervalle prédéterminé en utilisant la fréquence porteuse prédéterminée fournie au signal d'essai en tant que référence, par rapport aux données unitaires comportant les données de forme d'onde I et les données de forme d'onde Q lues à partir de la paire de mémoires de forme d'onde ;
une étape qui consiste à amener une unité de commande de séquence (6a) à lire les premières informations de séquence à partir de la mémoire de séquence, et à donner une instruction à une unité de commande de lecture concernant l'ordre de lecture et les adresses de lecture inclus dans les premières informations de séquence pour délivrer en sortie de manière séquentielle les données de forme d'onde I et les données de forme d'onde Q à partir de la paire de mémoires de forme d'onde ;

une étape qui consiste à amener l'unité de commande de séquence à lire les premières informations de séquence à partir de la mémoire de séquence et à donner une instruction à une paire de multiplicateurs (9, 10) concernant les niveaux de signaux souhaités inclus dans les premières informations de séquence en réponse à un moment auquel les données de forme d'onde I et les données de forme d'onde Q sont délivrées en sortie à partir de la paire de mémoires de forme d'onde, définissant ainsi respectivement les niveaux de signaux souhaités des données de forme d'onde I et des données de forme d'onde Q qui sont délivrées en sortie de manière séquentielle à partir de la paire de mémoires de forme d'onde à des niveaux de signaux souhaités ;

une étape qui consiste à amener une paire de convertisseurs numériques-analogiques (19, 20) à convertir respectivement les données de forme d'onde I et les données de forme d'onde Q qui sont délivrées en sortie de manière séquentielle à partir de la paire de multiplicateurs en un signal analogique de forme d'onde I et un signal analogique de forme d'onde Q ;

une étape qui consiste à amener, au niveau d'un étage numérique à partir de la paire de mémoires de forme d'onde jusqu'à la paire de convertisseurs numériques-analogiques, l'unité de commande de séquence à lire les deuxièmes informations de séquence à partir de la mémoire de séquence, et à donner une instruction à une unité de décalage de fréquence (34) concernant les fréquences de décalage incluses dans les deuxièmes informations de séquence pour définir les fréquences de décalage pour fournir des décalages de fréquence à une pluralité d'étapes à chaque intervalle prédéterminé en utilisant la fréquence porteuse prédéterminée fournie au signal d'essai en tant que référence, par rapport aux données unitaires comportant les données de forme d'onde I et les données de forme d'onde Q ; et

une étape qui consiste à amener une unité de sortie de signal d'essai (100) à convertir le signal analogique de forme d'onde I et le signal analogique de forme d'onde Q qui sont délivrées en sortie de manière séquentielle à partir de la paire de convertisseurs numériques-analogiques en un signal haute fréquence en utilisant un signal de fréquence porteuse après l'application d'une modulation en quadrature aux signaux, à délivrer en sortie finalement sous la forme du signal de modulation et en tant que signal d'essai conjointement avec des décalages de fréquence à une pluralité d'étapes à chaque intervalle prédéterminé en utilisant la fréquence porteuse prédéterminée en tant que référence.

**15.** Procédé de génération de signal d'essai pour un équipement de communication selon la revendication 14, **caractérisé en ce que**

l'étape qui consiste à définir les décalages de fréquence est effectuée dans une unité de décalage de fréquence fournie entre la paire de mémoires de forme d'onde et la paire de multiplicateurs.

**16.** Procédé de génération de signal d'essai pour un équipement de communication selon la revendication 14, **caractérisé en ce que**

l'étape qui consiste à définir les informations de fréquence de décalage est effectuée dans une unité de décalage de fréquence fournie entre la paire de multiplicateurs et la paire de convertisseurs numériques-analogiques.

**17.** Procédé de génération de signal d'essai pour un équipement de communication selon la revendication 14, **caractérisé en ce que**

l'étape qui consiste à délivrer en sortie le signal analogique de forme d'onde I et le signal analogique de forme d'onde Q finalement sous la forme du signal de modulation et en tant que signal d'essai conjointement avec des décalages de fréquence à une pluralité d'étapes à chaque intervalle prédéterminé en utilisant la fréquence prédéterminée en tant que référence, comprend :

une étape qui consiste à amener un modulateur en quadrature à délivrer en sortie le signal analogique de forme d'onde I et le signal analogique de forme d'onde Q qui sont délivrées en sortie de manière séquentielle à partir de la paire de convertisseurs numériques-analogiques, en tant que signal de modulation modulé en quadrature en utilisant un signal d'oscillation locale provenant d'un oscillateur local ;

une étape qui consiste à amener un convertisseur de fréquence à convertir le signal de modulation délivré en sortie à partir du modulateur en quadrature en un signal haute fréquence en utilisant un signal de fréquence porteuse provenant d'un oscillateur, à délivrer en sortie sous la forme du signal de modulation et en tant que signal d'essai conjointement avec la fréquence porteuse prédéterminée ; et

une étape qui consiste à amener un filtre passe-bande à éliminer des composantes de fréquence inutiles incluses dans un signal d'essai délivré en sortie à partir du convertisseur de fréquence, à délivrer en sortie finalement sous la forme du signal de modulation et en tant que signal d'essai conjointement avec des décalages de fréquence à une pluralité d'étapes à chaque intervalle prédéterminé en utilisant la fréquence porteuse prédéterminée en tant que référence.

**18.** Procédé de génération de signal d'essai pour un équipement de communication selon la revendication 17, **caractérisé en ce qu'**il comprend en outre :

lorsqu'au moins le filtre passe-bande est fourni en tant que composant ayant une caractéristique de fréquence irrégulière à l'unité de sortie de signal d'essai,
une étape qui consiste à amener la mémoire de séquence à stocker à l'avance des troisièmes informations de séquence qui comportent des valeurs de décalage de niveau pour définir des valeurs de décalage de niveau à partir d'un niveau de signal à la fréquence porteuse prédéterminée servant de référence de manière à être plus grandes, à mesure qu'une valeur absolue de fréquences de décalage devient plus grande pour fournir des décalages de fréquence à une pluralité d'étapes à chaque intervalle prédéterminé en utilisant en tant que référence la fréquence porteuse prédéterminée fournie au signal d'essai comme étant les fréquences de décalage incluses dans les deuxièmes informations de séquence ; et
une étape qui consiste à amener l'unité de commande de séquence à lire les troisièmes informations de séquence à partir de la mémoire de séquence, et à donner une instruction à la paire de multiplicateurs concernant les valeurs de décalage de niveau incluses dans les troisièmes informations de séquence en réponse à un moment auquel les données de forme d'onde I et les données de forme d'onde Q sont délivrées en sortie à partir de la paire de mémoires de forme d'onde, définissant ainsi des valeurs de décalage de niveau à partir d'un niveau de signal à la fréquence porteuse prédéterminée servant de référence de manière à être plus grande, à mesure qu'une valeur absolue de fréquences de décalage devient plus grande pour fournir des décalages de fréquence à une pluralité d'étapes à chaque intervalle prédéterminé en utilisant en tant que référence la fréquence porteuse prédéterminée fournie au signal d'essai comme étant les fréquences de décalage incluses dans les deuxièmes informations de séquence.

**19.** Procédé de génération de signal d'essai pour un équipement de communication selon la revendication 14, **caractérisé en ce qu'**il comprend en outre :

une étape qui consiste à amener la mémoire de séquence à stocker à l'avance des quatrièmes informations de séquence comportant le nombre de répétitions de la lecture de données de forme d'onde I et de données de forme d'onde Q pour chacune des données unitaires à partir de la paire de mémoires de forme d'onde afin de définir le nombre de répétitions pour chacune des données unitaires incluses dans le signal d'essai à être délivré en sortie finalement ; et
une étape qui consiste à amener l'unité de commande de séquence à lire les quatrièmes informations de séquence à partir de la mémoire de séquence, et à donner une instruction à l'unité de commande de lecture concernant le nombre de répétitions de la lecture de données de forme d'onde I et de données de forme d'onde Q pour chacune des données unitaires incluses dans les quatrièmes informations de séquence à partir de la paire de mémoires de forme d'onde en réponse à un moment auquel les données de forme d'onde I et les données de forme d'onde Q sont délivrées en sorte à partir de la paire de mémoires de forme d'onde, délivrant ainsi en sortie de manière séquentielle à partir de la paire de mémoires de forme d'onde les données unitaires en continu le nombre de fois correspondant au nombre de répétitions de la lecture de données de forme d'onde I et de données de forme d'onde Q pour chacune des données unitaires à partir de la paire de mémoires de forme d'onde.

**20.** Procédé de génération de signal d'essai pour un équipement de communication selon la revendication 14, **caractérisé en ce que**,
dans l'étape qui consiste à amener la mémoire de séquence à stocker à l'avance les deuxièmes informations de séquence, comportant les fréquences de décalage,
les deuxièmes informations de séquence comportant les fréquences de décalage à stocker dans la mémoire de séquence sont définies en tant que fréquences de décalage auxquelles un saut de fréquence qui permet d'obtenir une fréquence porteuse d'un signal d'essai imitant un signal de Système Global de Communication Mobile (GSM) à mesure que le signal d'essai est amené à varier en fonction du temps, moyennant quoi il est possible de réaliser un essai de résistance d'onde d'interférence pour un dispositif à tester dans un système d'Accès Multiple par Répartition en Code à Large Bande (WCDMA) par le signal GSM de manière à ce que le signal GSM se déplace de manière discrète dans une plage de fréquences reçues du dispositif à tester dans le système WCDMA.

**21.** Procédé de génération de signal d'essai pour un équipement de communication selon la revendication 14, **caractérisé en ce que**,
dans l'étape qui consiste à définir des niveaux de signaux des données de forme d'onde I et des données de forme d'onde Q qui sont délivrées en sortie de manière séquentielle à partir de la paire de mémoires de forme d'onde à des niveaux de signaux souhaités, respectivement,
la paire de multiplicateurs sont utilisés pour multiplier les données de forme d'onde I et les données de forme d'onde Q délivrées en sortie à partir de la paire de mémoires de forme d'onde par une valeur de multiplication de gain déterminée sur la base des niveaux de signaux donnés comme instruction par l'unité de commande de séquence, moyennant quoi des niveaux de signaux des données de forme d'onde I et des données de forme d'onde Q lues à partir de la paire de mémoires de forme d'onde sont définis à des niveaux de signaux inclus dans les premières informations de séquence stockées dans la mémoire de séquence.

22. Procédé de génération de signal d'essai pour un équipement de communication selon la revendication 18, **caractérisé en ce que**,
dans l'étape qui consiste à définir des niveaux de signaux des données de forme d'onde I et des données de forme d'onde Q qui sont délivrées en sortie de manière séquentielle à partir de la paire de mémoires de forme d'onde à des niveaux de signaux souhaités, respectivement,
la paire de multiplicateurs sont utilisés pour multiplier les données de forme d'onde I et les données de forme d'onde Q délivrées en sortie à partir de la paire de mémoires de forme d'onde par une valeur de multiplication de gain déterminée sur la base des valeurs de décalage de niveau incluses dans les troisièmes informations de séquence, qui sont données comme instruction par l'unité de commande de séquence, moyennant quoi des niveaux de signaux des données de forme d'onde I et des données de forme d'onde Q lues à partir de la paire de mémoires de forme d'onde sont définis aux valeurs de décalage de niveau incluses dans les troisièmes informations de séquence stockées dans la mémoire de séquence.

23. Procédé de génération de signal d'essai pour un équipement de communication selon la revendication 14, **caractérisé en ce qu'**il comprend en outre :

une étape qui consiste à préparer : une base de données d'essai formée dans un lecteur de disque dur dans lequel une base de données de forme d'onde qui stocke des données de forme d'onde I et des données de forme d'onde Q des données unitaires incluses dans le signal d'essai et une base de données de séquence qui stocke différentes informations de séquence sont fournies ; et une unité d'écriture de données reliée à la base de données d'essai ;
une étape qui consiste à télécharger, dans la base de données d'essai, les données de forme d'onde I et les données de forme d'onde Q qui sont préparées à l'extérieur pour être stockées dans la base de données de forme d'onde, et les différentes informations de séquence stockées dans la base de données de séquence ; et une étape qui consiste à amener l'unité d'écriture de données à lire, à partir de la base de données de forme d'onde, les données de forme d'onde I et les données de forme d'onde Q correspondant à un signal d'essai à délivrer en sortie nouvellement pour être écrites dans la paire de mémoires de forme d'onde, et à lire des informations de séquence correspondant au signal d'essai à délivrer en sortie nouvellement à partir de la base de données de séquence pour être écrites dans la mémoire de séquence.

24. Procédé de génération de signal d'essai pour un équipement de communication selon la revendication 14, **caractérisé en ce que**
l'étape qui consiste à définir les fréquences de décalage comprend :

une étape qui consiste à amener un oscillateur à commande numérique à spécifier les fréquences de décalage ($\omega$') pour fournir des décalages de fréquence à une pluralité d'étapes à chaque intervalle prédéterminé en utilisant en tant que référence la fréquence porteuse prédéterminée du signal d'essai, comme étant les fréquences de décalage incluses dans les deuxièmes informations de séquence lues à partir de la mémoire de séquence ;
une étape qui consiste à amener l'oscillateur à commande numérique à générer une onde sinusoïdale $\sin\omega$'(t) et une onde cosinusoïdale $\cos\omega$'(t) qui correspondent aux fréquences de décalage ($\omega$') spécifiées par l'unité de commande de séquence à transmettre à l'unité de décalage de fréquence ; et
une étape qui consiste à amener, lorsque des fréquences $\omega$ (= $2\pi f$) des données de forme d'onde I et des données de forme d'ondes Q sont décalées par des fréquences de décalage $\omega$'(= $2nf$') stockées dans la mémoire de séquence, l'unité de décalage de fréquence à effectuer un traitement de décalage de fréquence de manière à ce que, lorsque les données de forme d'onde I et les données de forme d'onde Q sont respectivement désignées par :

$$\cos\omega(t),\ \sin\omega(t)\ \dots(1),$$

l'onde sinusoïdale et l'onde cosinusoïdale sont converties respectivement en :

$$\cos\{\omega(t)\ +\ \omega'(t)\},\ \sin\{\omega(t)\ +\ \omega'(t)\}\ \dots\ (2).$$

**25.** Procédé de génération de signal d'essai pour un équipement de communication selon la revendication 24, **caractérisé en ce que**
l'étape qui consiste à amener l'unité de décalage de fréquence à effectuer un traitement de décalage de fréquence obtient les décalages de fréquence représentés par la formule (3) lorsque la formule (2) est exprimée par la formule (1) et les fréquences de décalage ($\omega'$) pour être :

$$\cos\{\omega(t)\ +\ \omega'(t)\}$$
$$=\ -\sin\omega(t)\cdot\sin\omega'(t)\ +\ \cos\omega(t)\cdot\cos\omega'(t),$$
$$\sin\{\omega(t)\ +\ \omega'(t)\}$$
$$=\ \cos\omega(t)\cdot\sin\omega'(t)\ +\ \sin\omega(t)\cdot\cos\omega'(t)\ \dots\ (3),$$

**26.** Procédé de génération de signal d'essai pour un équipement de communication selon la revendication 25, **caractérisé en ce que**
afin de réaliser les décalages de fréquence représentés par la formule (3), l'étape qui consiste à amener l'unité de décalage de fréquence à effectuer un traitement de décalage de fréquence comprend :

une étape qui consiste à amener des premier et deuxième multiplicateurs à multiplier les données de forme d'onde I $\cos\omega(t)$ et les données de forme d'onde Q $\sin\omega(t)$ respectivement par une première composante de décalage de fréquence $\cos\omega'(t)$ ;
une étape qui consiste à amener des troisième et quatrième multiplicateurs à multiplier les données de forme d'onde I $\cos\omega(t)$ et les données de forme d'onde Q $\sin\omega(t)$ par une deuxième composante de décalage de fréquence $\sin\omega'(t)$ ;
une étape qui consiste à amener un premier additionneur à additionner une sortie provenant du premier multiplicateur et une sortie provenant du quatrième multiplicateur, délivrant ainsi en sortie le premier décalage de fréquence $\cos\{\omega(t) + \omega'(t)\} = -\sin\omega(t)\cdot\sin\omega'(t) + \cos\omega(t)\cdot\cos\omega'(t)$ ; et
une étape qui consiste à amener un deuxième additionneur à additionner une sortie provenant du deuxième multiplicateur et une sortie provenant du troisième multiplicateur, délivrant ainsi en sortie le deuxième décalage de fréquence $\sin\{\omega(t) + \omega'(t)\} = \cos\omega(t)\cdot\sin\omega'(t) + \sin\omega(t)\cdot\cos\omega'(t)$ .

FIG. 1A

EP 1 763 148 B1

F I G. 1B

F I G. 1C

FIG.1D

4a

| Reading numbers | Waveform types | Read starting addresses | Read ending addresses | Level offset values | Offset frequencies $\omega'$ |
|---|---|---|---|---|---|
| 1 | A | $AD_{1S}$ | $AD_{1E}$ | 0dB(0) | +0Hz |
| 2 | A | $AD_{1S}$ | $AD_{1E}$ | +2dB(0) | 1MHz |
| 3 | A | $AD_{1S}$ | $AD_{1E}$ | +5dB(0) | -2MHz |
| 4 | A | $AD_{1S}$ | $AD_{1E}$ | +5dB(0) | +2MHz |
| 5 | A | $AD_{1S}$ | $AD_{1E}$ | +2dB(0) | -1MHz |

1a

FIG.2

FIG.3A

FIG.3B

(5)  (1)    (4)         (2)  (3)

GSM  GSM    GSM    WCDMA    GSM    GSM
signal signal  signal   signal    signal  signal

———→ Frequency

Frequency hopping

F I G. 4
(PRIOR ART)

| AI waveform | ⌐2 |

AD₁S          AD₁E

| AQ waveform | ⌐3 |

AD₁S          AD₁E

F I G. 5

⌐1a

———————→ Frequency

⌐1a

———————→ Frequency

ω'

F I G. 6

Cos ω(t) · Sin ω'(t)+Sin ω(t) · Cos ω'(t)= Sin {ω(t)+ω'(t)}

−Sin ω(t) · Sin ω'(t)+Cos ω(t) · Cos ω'(t)= Cos {ω(t)+ω'(t)}

$$\cdots\cdots (3)$$

F I G. 7

FIG. 8

| Reading numbers | Waveform types | Read starting addresses | Read ending addresses | Level offset values | Offset frequencies $\omega'$ | Numbers of repetitions |
|---|---|---|---|---|---|---|
| 1 | A | $AD_{1S}$ | $AD_{1E}$ | 0dB(0) | 0Hz | 3 |
| 2 | A | $AD_{1S}$ | $AD_{1E}$ | +2dB(0) | +1MHz | 2 |
| 3 | A | $AD_{1S}$ | $AD_{1E}$ | +5dB(0) | -2MHz | 4 |
| 4 | A | $AD_{1S}$ | $AD_{1E}$ | +5dB(0) | +2MHz | 3 |
| 5 | A | $AD_{1S}$ | $AD_{1E}$ | +2dB(0) | -1MHz | 3 |

FIG. 9

F I G. 10

**EP 1 763 148 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004330594 A
- JP 7273555 A